# EUROPEAN PATENT SPECIFICATION

(11) **EP 4 373 767 B1**
(45) Date of publication and mention of the grant of the patent: **09.09.2026**
(21) Application number: 22744484.1
(22) Date of filing: 21.07.2022
(51) Int. Cl.: B65G 1/04

(54) **A GRID FRAMEWORK STRUCTURE**
GITTERRAHMENSTRUKTUR
STRUCTURE D'OSSATURE DE GRILLE

(30) Priority: 23.07.2021 GB 202110636
(43) Date of publication of application: 29.05.2024
(73) Proprietor: Ocado Innovation Limited, Hatfield, Hertfordshire AL10 9UL (GB)
(72) Inventor: PARKS, Ian, Hatfield Hertfordshire AL10 9UL (GB); INGRAM-TEDD, Andrew, Hatfield Hertfordshire AL10 9UL (GB)
(74) Representative: Ocado Group IP Department
(86) International application number: PCT/EP2022/070473
(87) International publication number: WO 2023/001955

(56) References cited:
- WO-A1-2019/238694
- WO-A1-2020/224828
- WO-A1-2022/034195
- US-A1- 2019 375 590

## Description

### Field of Invention

The present invention relates to the field of remotely operated load handling devices on tracks located on a grid framework structure for handling storage containers or bins stacked in the grid framework structure, more specifically to a grid framework structure for supporting the remotely operated load handling devices.

### Background

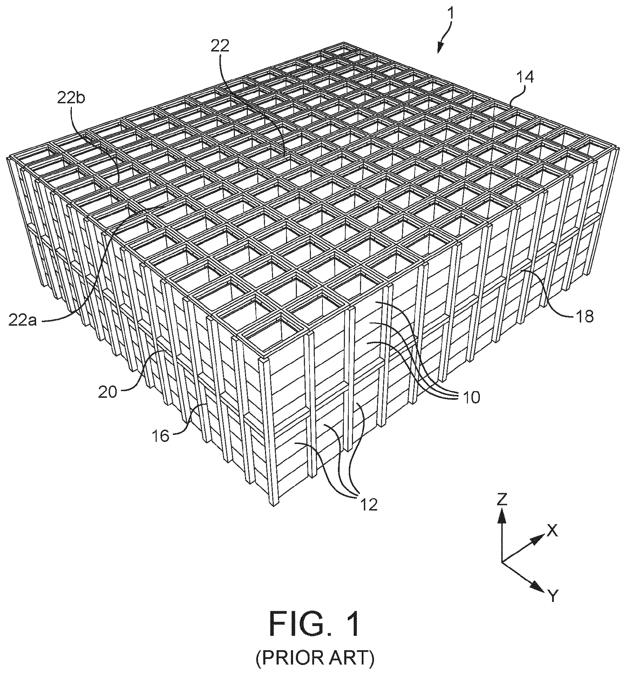

Storage and retrieval systems 1 comprising a three-dimensional storage grid structure, within which storage containers/bins are stacked on top of each other, are well known. PCT Publication No. WO2015/185628A (Ocado) describes a known storage and fulfilment system in which stacks of bins or containers are arranged within a grid framework structure. The bins or containers are accessed by load handling devices remotely operative on tracks located on the top of the grid framework structure. A system of this type is illustrated schematically in Figures 1 to 3 of the accompanying drawings.

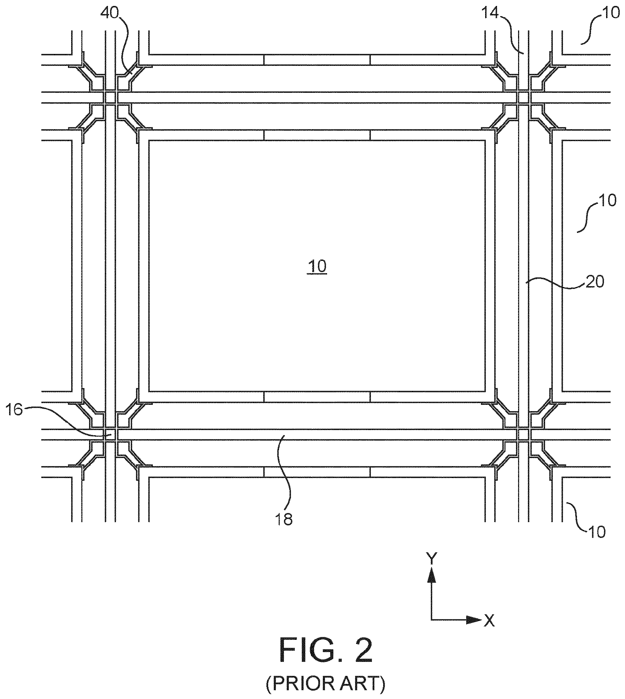

As shown in Figures 1 and 2, stackable containers, known as bins or containers or storage containers 10, are stacked on top of one another to form stacks 12. The stacks 12 are arranged in a grid framework structure 14 in a warehousing or manufacturing environment. The grid framework is made up of a plurality of storage columns or grid columns. Each grid in the grid framework structure has at least one grid column for storage of a stack of containers. Figure 1 is a schematic perspective view of the grid framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

The grid framework structure 14 comprises a plurality of upright members or upright columns 16 that support horizontal members 18, 20. A first set of parallel horizontal grid members 18 is arranged perpendicularly to a second set of parallel horizontal grid members 20 and arranged in a grid pattern to form a grid structure comprising a plurality of grid cells or grid spaces supported by the upright members 16. The members 16, 18, 20 are typically manufactured from metal and typically welded or bolted together or a combination of both. The bins 10 are stacked between the members 16, 18, 20 of the grid framework structure 14, so that the grid framework structure 14 guards against horizontal movement of the stacks 12 of bins 10, and guides vertical movement of the bins 10.

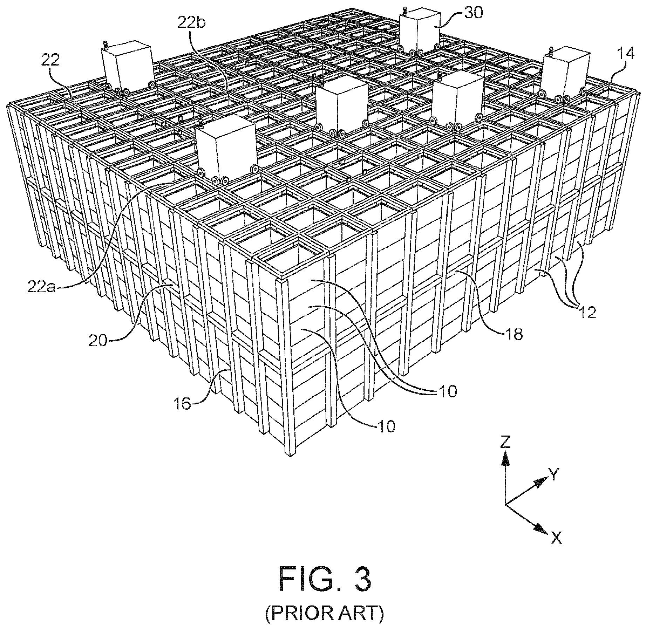

The top level of the grid framework structure 14 includes rails 22 arranged in a grid pattern across the top of the stacks 12. Referring additionally to Figure 3, the rails 22 support a plurality of load handling devices 30. A first set 22a of parallel rails 22 guide movement of the robotic load handling devices 30 in a first direction (for example, an X-direction) across the top of the grid framework structure 14, and a second set 22b of parallel rails 22, arranged perpendicular to the first set 22a, guide movement of the load handling devices 30 in a second direction (for example, a Y-direction), perpendicular to the first direction. In this way, the rails 22 allow movement of the robotic load handling devices 30 laterally in two dimensions in the horizontal X-Y plane, so that a load handling device 30 can be moved into position above any of the stacks 12.

A known load handling device 30 shown in Figure 4 and 5 comprising a vehicle body 32 is described in PCT Patent Publication No. WO2015/019055 (Ocado), hereby incorporated by reference, where each load handling device 30 only covers one grid space of the grid framework structure 14. Here, the load handling device 30 comprises a wheel assembly comprising a first set of wheels 34 consisting of a pair of wheels on the front of the vehicle body 32 and a pair of wheels 34 on the back of the vehicle body 32 for engaging with the first set of rails or tracks to guide movement of the device in a first direction, and a second set of wheels 36 consisting of a pair of wheels 36 on each side of the vehicle 32 for engaging with the second set of rails or tracks to guide movement of the device in a second direction. Each of the sets of wheels are driven to enable movement of the vehicle in X and Y directions respectively along the rails. One or both sets of wheels can be moved vertically to lift each set of wheels clear of the respective rails, thereby allowing the vehicle to move in the desired direction.

The load handling device 30 is equipped with a lifting device or crane mechanism to lift a storage container from above. The crane mechanism comprises a winch tether or cable 38 wound on a spool or reel (not shown) and a grabber device 39. The lifting device comprises a set of lifting tethers 38 extending in a vertical direction and connected nearby or at the four corners of a lifting frame 39, otherwise known as a grabber device (one tether near each of the four corners of the grabber device) for releasable connection to a storage container 10. The grabber device 39 is configured to releasably grip the top of a storage container 10 to lift it from a stack of containers in a storage system of the type shown in Figure 1 and 2.

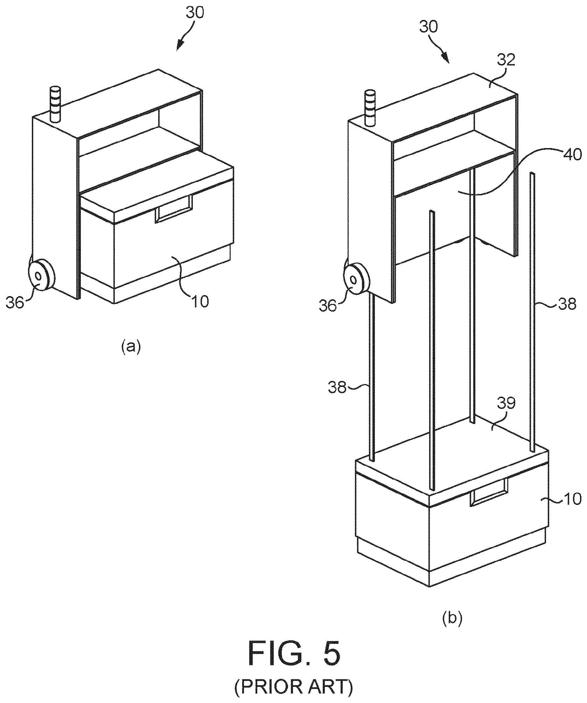

The wheels 34, 36 are arranged around the periphery of a cavity or recess, known as a container-receiving space 40, in the lower part. The recess is sized to accommodate the container 10 when it is lifted by the crane mechanism, as shown in Figure 5 (a and b). When in the recess, the container is lifted clear of the rails beneath, so that the vehicle can move laterally to a different location. On reaching the target location, for example another stack, an access point in the storage system or a conveyor belt, the bin or container can be lowered from the container receiving portion and released from the grabber device.

However, the grid framework structure is subjected to various external and internal forces. These include but are not limited to ground movement which can be attributed to the composition of the ground or soil type, forces developed by the movement of the load handling devices (which can weigh in excess of 100kg) on the grid framework structure, movement as a result of nearby constructions, moving vehicles such as trains, or even movement during an earthquake or storm. It is paramount to keep the individual elements within the grid framework structure intact during movement as a result of such external forces experienced by the grid framework.

To ensure stability of the grid framework structure, prior art storage systems are largely dependent on various supports and bracing arranged within or at least partly along the periphery of the grid. However, the use of various supports and bracing (anti-movement braces) to stabilise the grid framework structure from internal and external forces is disadvantageous for a number of reasons. The supports and bracing occupy space or area which could be utilised by the grid to store containers; in that it prevents optimum usage of available space or area for the storage of containers. The need of a supporting structure may limit the available options for positioning of the grid framework structure since any auxiliary grid supporting structure often requires connection to a surrounding structure such as the inner walls of a building, and the requirement of a supporting structure that is not cost efficient.

WO2019/101367 (Autostore Technology AS) teaches a grid supporting structure for integration in a storage grid structure of an automated storage system. The grid supporting structure is made up of four storage columns interconnected by multiple vertically inclined support struts. The storage column profiles have a cross-section comprising a hollow centre section and four corner sections, each corner section comprising two perpendicular bin guiding plates for accommodating a corner of a storage bin. The support struts have a width which allows them to fit in between two parallel guiding plates so as to not compromise the ability of the storage columns to accommodate a stack of containers or storage bins.

An alternative grid framework structure is thus required that minimises the impact on the available space or area for the storage of containers, so as to provide a free-standing storage grid, or at least require a less extensive auxiliary grid support structure.

Much of the world's population is located along seismic fault lines or in the paths of powerful storms such as hurricanes and tornadoes. Locating the grid frame structure in such areas carries a risk of structural damage from seismic and storm events, as the current grid framework structure may not hold the grid structure together. Powerful seismic and storm events may result in the failure of the structural integrity of the grid framework structure, e.g. as a result in the inability of the structural fasteners to keep the grid firmly attached to the upright members. Earthquakes can be divided into four categorises labelled as Type A, B, C, or D depending on the severity of the earthquake, whereby Type A is considered the least powerful earthquake and Type D is considered the most powerful earthquake. Types A - D can be graded by their spectral acceleration which is the maximum acceleration measured in g that an object, above ground level, will experience during an earthquake. Type D is considered to represent the most powerful seismic event and typically has a measured spectral acceleration in the region 0.5g to 1.83g (short period spectral response acceleration SDS, see https://www.fegstructural.com/seismic-design-category-101/) and results in most failure of buildings. As powerful seismic events act on a structure, the three dimensional dynamic forces compromise the structural fasteners holding the grid framework structure together, causing them to work their way loose or out of the members in which they are embedded or, if they remain in place, they may tear their way through a structural fastener.

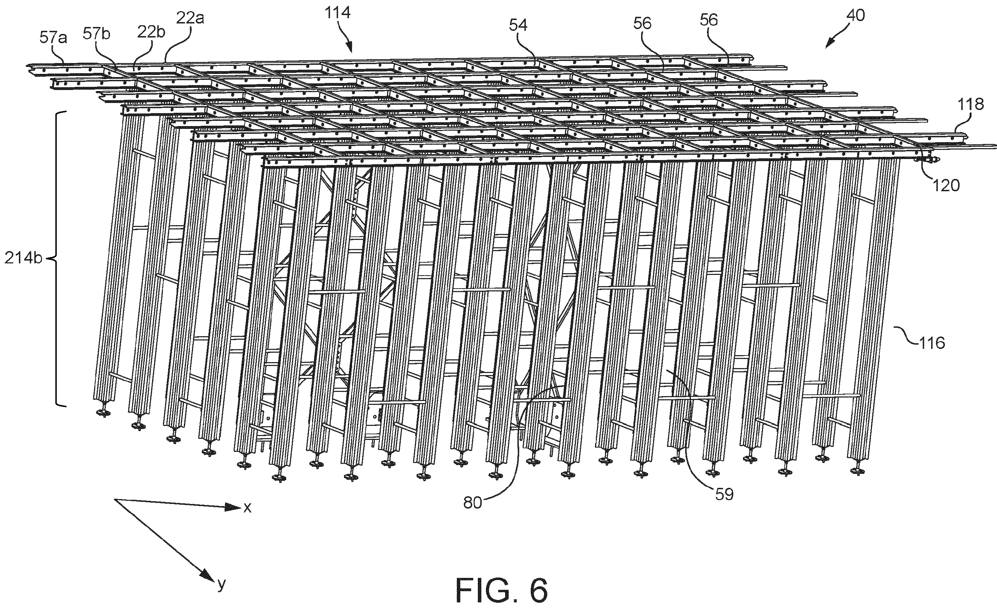

Many jurisdictions, such as the US states, have passed laws mandating that all new buildings, residential or commercial, be constructed with certain seismic bracing features incorporated therein. A grid framework structure comprising internal bracing features incorporated within the grid framework structure, whereby one or more of the upright members are braced together by one or more bracing members or bracing towers, is shown in Figure 6. Typically, the bracing members are distributed internally throughout the grid framework structure. The distribution of the internal bracing is largely dependent on the size of the grid framework structure, the ground condition, and the environmental condition such as temperature. However, whilst the grid framework structure is able to withstand very low level seismic events having a spectral acceleration less than 0.3 g, presently there is no earthquake restraint system for a grid framework structure that is able to withstand more powerful Type C and Type D seismic events categorised by a spectral acceleration in the region of 0.5g to 1.83g.

WO2020/224828 (Autostore Tech AS) discloses the preamble of claim 1 and provides a storage system comprising a storage grid structure, wherein the storage grid structure features grid supports comprising multiple base angle brackets, each base angle bracket comprises a vertical flange connected to a storage column profile, a horizontal flange connected by bolts to a floor upon which the storage grid is arranged and a web interconnecting the flanges.

An earthquake restraint grid framework structure is thus required that is able to withstand powerful seismic events.

### Summary of Invention

Whilst the current grid framework structure is able to withstand relatively small levels of ground movement usually less than 0.33g spectral acceleration (short period spectral response acceleration SDS, see https://www.fegstructural.com/seismic-design-category-101/), this cannot be said for ground movement in excess of 0.33g that is usually representative of Type C and Type D seismic events. The joints linking the grid members and the upright columns, which are largely bolted together would tend to loosen and in an extreme case separate, affecting the structure of the grid framework structure. Even though one or more braced towers can be incorporated amongst the upright members to improve the stability of the grid framework structure, this may not be enough to maintain the stability of the grid framework structure in an event of a Type C or Type D seismic event. The present invention has mitigated the above problem by incorporating a plurality of discrete structural support members internally within the grid framework structure that are able to resist forces as a result of movement of the grid framework structure better than the bracing members connecting the upright members together. More specifically, the present invention provides a grid framework system comprising:
A) a substructure;
B) a grid framework structure for supporting a load handling device operative to move one or more containers in a stack, said grid framework structure comprising:
   i) a plurality of upright members, the plurality of upright members being spatially arranged to form a three dimensional supporting framework structure comprising a plurality of vertical storage columns for storage containers to be stacked between the upright members, the supporting framework structure being mounted to the substructure;
   ii) a grid structure lying in a horizontal plane and mounted to the supporting framework structure, said grid structure comprising a plurality of grid members comprising a first set of grid members and a second set of grid members, the first set of grid members extending in a first direction and the second set of grid members extending in a second direction, the second direction being substantially perpendicular to the first direction such that the plurality of grid members are arranged in a grid pattern comprising a plurality of grid cells, each of the plurality of grid cells comprising a grid opening;
characterised in that the grid framework structure further comprises:
a plurality of solid walled panels distributed internally within the framework structure such that each of the plurality of solid walled panels lies in a respective vertical plane within the supporting framework structure having a first end anchored to the substructure and a second end secured to the grid structure so as to provide stability to the grid framework structure.

For the avoidance of doubt, the term supporting "framework structure" refers to a three-dimensional structure comprising the upright members arranged to form storage columns, the term "grid structure" refers to a two-dimensional structure comprising the first and second sets of grid members and extending substantially horizontally, and the term "grid framework structure" refers to a three-dimensional structure comprising the framework structure, the grid structure, and the solid walled panels.

Optionally, the plurality of upright members being interconnected at their upper ends by the plurality of grid members where the first and second sets of grid members intersect in the grid structure such that each of the plurality of vertical storage columns are located below a respective grid opening.

Each of the grid members can be formed as a track support to which is mounted a track for guiding the movement of the robotic load handling device on the grid structure. Thus, the grid structure can be defined as a first set of parallel track supports extending in a first direction and a second set of parallel tracks extending in a second direction, the second direction being substantially perpendicular to the first direction such that the first and second sets of parallel track supports are arranged in a grid pattern comprising a plurality of grid cells or grid spaces. The track support making up the grid structure in transverse cross section can be a solid support of C-shaped or U-shaped or I-shaped cross section, or even a double-C or double-U shaped support. Alternatively, the tracks can form part the grid members in the sense that the tracks are integrated into the grid members. The grid structure is supported on a supporting framework structure comprising a plurality of vertical uprights forming multiple storage columns. For the purpose of explanation of the present invention, the supporting framework structure represents the load bearing structure supporting the grid structure comprising the plurality of grid members. To improve the structural integrity of the framework structure, one or more sub-groups of the plurality of the upright members are braced together by one or more bracing members to form one or more bracing towers. A sub-group can include two or more upright members.

In contrast to bracing a sub-group of upright members to form one or more bracing towers internally within the grid framework structure, in which the braces are susceptible to working their way loose in a seismic event, the present applicant has realised that structurally supporting the grid framework structure by distributing a plurality of solid walled panels internally within the grid framework structure greatly improves the structural integrity of the grid framework structure. The plurality of solid walled panels act as discrete solid walled panels within the supporting framework structure, or are individually separated from the plurality of upright members within the supporting framework structure. It is believed that the solid walled panels provide better torsional resistance in comparison to bracing a sub-group of the upright members together by one or more diagonal bracing members at various points along the upright members. Ground movement as a result of a seismic event or other event generates both lateral and twisting forces, which are transmitted to the grid framework structure anchored to the ground or the substructure. Such forces are better absorbed by the solid walled panels as the applied forces are distributed throughout the face of the solid walled panels as opposed to along various points along the upright members provided by the bracing members, which are susceptible to being loosened. Each of the plurality of solid walled panels is anchored to a substructure and supported to the grid structure such that during ground movement as a result of a seismic event or other event (e.g. as a result of nearby constructions or moving vehicles such as trains), the torsional rigidity of the solid walled panels anchored to the ground and supporting the grid structure helps to reduce or mitigate excessive movement of the surrounding grid framework structure. In other words, the plurality of solid walled panels helps to stiffen the grid framework structure from excessive movement as a result of ground movement. Various fasteners, e.g. bolts, can be used to anchor each of the plurality of solid walled panels to the substructure. The substructure is separate to the grid framework structure and the grid framework structure rests on the substructure. For avoidance of doubt, the grid framework structure and the substructure are collectively termed a grid framework system and the grid framework structure forms part of the grid framework system. The substructure can, optionally, be considered as part of the grid framework structure and is the area where the grid framework structure is mounted to the ground. In this instance, the grid framework system can be the grid framework structure. The substructure transfers the load from the grid framework structure to the substructure and isolates it horizontally from the ground. The substructure includes the foundations and is typically composed of concrete. However, the ground is sufficiently stale, the substructure can include the ground itself such that the first end of the solid walled panel is anchored to the substructure and a second end is secured to the grid structure. Optionally, the plurality of solid walled panels can be anchored directly to the substructure and/or the ground.

The plurality of solid walled panels are spaced apart within the supporting framework structure. Preferably, the plurality of solid walled panels are spatially distributed within the framework structure such that two or more of the plurality of solid walled panels are separated by one or more of the plurality of upright members. Thus, the plurality of solid walled panels are integrated into the framework of the supporting framework structure in the sense that the plurality of solid walled panels forms part of the supporting framework structure. Optionally, the plurality of solid walled panels can be integrated amongst a plurality of braced towers where a sub-group of the upright members are braced together. More preferably, the plurality of solid walled panels comprises a first set of solid walled panels and a second set of solid walled panels, the first set of solid walled panels extending in the first direction (i.e. extending horizontally along the first direction) and the second set of solid walled panels extending in the second direction (i.e. horizontally along the second direction). Optionally, the first set of solid walled panels are spatially distributed along the first direction and the second set of solid walled panels are spatially distributed along the second direction. The first and second sets of solid walled panels spatially distributed in the first and second direction provides lateral support in both direction internally within the supporting framework structure. Optionally, one or more of the plurality of solid walled panels are spatially distributed within the framework structure such that adjacent solid walled panels are spaced apart or separated by one or more grid cells.

One or more of the plurality of solid walled panels are secured to a pair of the plurality of upright members. In addition to securing one or more of the plurality of solid walled panels to the grid structure, the plurality of solid walled panels can further offer support to the grid framework structure by securing one or more of the solid walled panels to the plurality of upright members, more specifically one or more of the plurality of solid walled panels can be secured to a pair of the plurality of upright members. Thus, movement of the upright members as a result of ground movement is transferred to the solid walled panels which are able to absorb such movement due to the structural integrity of the solid walled panels in comparison to the upright members.

Optionally, the grid framework structure is a self-supporting rectilinear assemblage of the plurality of upright members having a first dimension extending in the first direction and a second dimension extending in the second direction, and wherein the first set of solid walled panels are spatially distributed along the first direction such that the first set of solid walled panels partially extends along the first dimension and the second set of solid walled panels are spatially distributed along the second direction such that the second set of solid walled panels partially extends along the second dimension. The spatial distribution of the plurality of solid walled panels in the first and second directions are such that the first set of solid walled panels partially extend along a first dimension of the grid framework structure and the second set of solid walled panels partially extend along a second dimension of the grid framework structure.

Preferably, each of the plurality of solid walled panels is secured to the grid structure at one or more nodes where the first and the second set of grid members intersect or meet in the grid structure. For the purpose of definition of the terms used in the description, the term "nodes" represents the areas of the grid structure where the first and second set of grid members intersect in the grid pattern, i.e. at the corners of each of the grid cells. Depending on the width of one or more of the plurality of solid walled panels, one or more of the plurality of solid walled panels may be supported to the grid structure at one or more nodes of the grid structure. Optionally, the width of one or more of the plurality of solid walled panels can extend across a plurality of the grid cells. The width of the plurality of solid walled panels distributed internally within the supporting framework structure can be uniform or vary internally throughout the supporting framework structure. Thus, one or more of the plurality of solid walled panels can extend horizontally along the first and/or the second direction across different numbers of grid cells. Optionally, the width of the one or more of the plurality of solid walled panels extends across a plurality of the grid cells in the ratio 1:X, where X is in the range 1 to 5. For example, the width of a solid walled panel can extend horizontally along the first and/or the second direction across one grid cell up to any number of grid cells, e.g. five grid cells, but allowing the solid walled panels to be spatially distributed in either the first or the second direction along the grid framework structure. During ground movement such as in a seismic event, different forces are applied to the grid framework structure. These include but are not limited to the shear forces on the fixtures anchoring the supporting framework structure to the substructure, and the uplift forces, which are the uplift pressure experienced by the anchors during ground movement. As applied forces largely in the horizontal direction are transferred to the substructure via one or more of the plurality of solid walled panels, there is the tendency that such applied forces could de-couple one or more solid walled panels from the substructure. It is speculated that applied forces in the horizontal direction impart a moment of force to the solid walled panels that may cause an uplift force to be applied to one end of the solid walled panels anchored to the substructure. Thus, the resistance of the one or more of the plurality of solid walled panels within the supporting framework structure to such uplift forces is very much dependent on the degree by which the solid walled panels are anchored to the substructure. This in turn is very much dependent on the depth of the fixture used to anchor the solid walled panels to the substructure, where the greater the depth of the fixture, the greater the anchorage and vice-versa. However, it is found that the width of the one or more of the plurality of solid walled panels extending in the first or second direction is inversely proportional to the depth of the anchorage of the one or more of the plurality of solid walled panels to the substructure. For example, doubling the width of the solid walled panel reduces the uplift forces either end of the solid walled panel by a half and so on, which in turn reduces the depth by which the solid walled panels would need to be anchored to the substructure. As a result, the resiliency of the grid framework structure can be tuned to the depth of the substructure which is in turn is dependent on the depth of the foundation or the soil type of the ground. Where the depth of the substructure is shallow, a greater width or longer solid walled panels would need to be incorporated within the supporting framework structure to stabilise the grid framework structure so as to reduce the uplift forces applied to the solid walled panels and vice-versa. A similar effect of reducing the uplift forces as a result of applied forces along the first or second direction can be achieved by providing a series of discrete solid walled panels extending along the first or second direction. Optionally, structural support can be provided to the grid framework structure by one or more of the plurality of solid walled panels having a width extending across a number of grid cells or a number of discrete smaller width solid walled panels that are spaced apart to extend across the same number of grid cells. As a result, one or more of the plurality of solid walled panels supports the grid structure at multiple nodes, each node representing an area where the first and second sets of grid members intersect. To enable the width of the solid walled panels to extend across multiple grid cells, optionally one or more of the plurality of solid walled panels comprises a plurality of solid wall segments joined together. Not only does that each of the plurality of solid walled panels secured to the grid structure at one or more nodes provides lateral stability of the supporting framework structure but also provides load bearing capability for supporting the grid structure mounted to the plurality of solid walled panels.

To secure the supporting framework structure to the grid structure at each of the nodes, preferably, each of the plurality of upright members is secured to the grid structure by a first type cap plate and each of the plurality of the solid walled panels is secured to the grid structure by a second type cap plate, the first and the second type cap plates each having a cross shape having four perpendicular end portions, each of the four perpendicular end portions being configured for connecting with at least one of the plurality of grid members extending in the first and the second direction. The cap plate enables the first and second sets of grid members to be secured in a grid like pattern to the supporting framework structure. To accommodate both the plurality of solid wall panels and the upright members in the supporting framework structure, a first type cap plate can be used to secure the plurality of upright members to the grid structure and a second type cap plate can be used to secure the plurality of solid walled panels to the grid structure. Optionally, each of the plurality of the solid walled panels is secured to its respective second type cap plate by a bracket. For example, the bracket is L-shaped having downwardly extending bracket members 264 that are spaced apart corresponding to the thickness of the solid walled panel 200 for receiving the uppermost portion of the solid walled panel. One way to secure each of the plurality of solid walled panels to its respective second type cap plate is that each of the plurality of the solid walled panels is secured to its respective second type cap plate by a second type upright member having securing members either side of the solid walled panel, the securing members either side of the solid walled panel at least partially extending vertically along the solid walled panel between the substructure and the grid structure such that the upper ends of the securing members either side of the solid walled panel are secured to the second type cap plate. For example, the second type upright member functions as a clamp such that the securing members either of the solid walled panel function clamping members.

The structural integrity of the grid framework system can be tailored to meet the requirements of the environment in which the grid framework structure is located. For example, the inner core of the solid walled panels may comprise an internal frame comprising upwardly extending members connected together at the top and bottom of the upwardly extending members by horizontal structural or frame members extending between the upwardly extending members. Optionally, each of the horizontal structural or frame members connecting the upwardly extending members at the top and bottom is a U-shaped channel. For Type C or even Type D seismic events, the choice of materials of one or more of the plurality of solid walled panels can be tailored to meet the requirements of the grid framework structure. For example, one or more of the plurality of solid walled panels may be a laminated panel having an inner core sandwiched between outer sheet metal plates. Optionally, the inner core can be a composite comprising mineral fibres embedded within a resin matrix. In comparison to solid metal plates, which are heavy and costly, composite structures are load bearing, lightweight, and offer superior structural strength.

In addition to providing structural support to the grid framework structure, optionally, one or more of the plurality of solid walled panels are arranged in the supporting framework structure so as to create one or more zones within the supporting framework structure. Optionally, the one or more zones comprises a refrigerated zone comprising one or more refrigerated chillers.

Optionally, one or more of the plurality of solid walled panels may be a fire break comprising a fire resistant material for restraining the spread of fire within the supporting framework structure. One or more of the plurality of solid walled panels can be composed of a fire resistant material, e.g. mineral wool, vermiculite, etc., to prevent the spread of fire to a neighbouring storage column.

The present invention further provides a storage and retrieval system comprising:
i) a grid framework system according to the present invention;
ii) a plurality of stacks of containers arranged in storage columns located below the grid structure, wherein each of the plurality of stacks of containers is located vertically below a grid cell;
iii) a plurality of robotic load handling devices for lifting and moving containers stacked in the stacks, the plurality of load handling devices being remotely operated to move laterally on the grid structure above the storage columns to access the containers through the grid openings, each of said plurality of robotic load handling devices comprising:
   a) a wheel assembly for guiding the load handling device on the grid structure;
   b) a container-receiving space located above the grid structure; and
   c) a lifting device arranged to lift a single container from a stack into the container-receiving space.

### Description of Drawings

Further features and aspects of the present invention will be apparent from the following detailed description of an illustrative embodiment made with reference to the drawings, in which:
Figure 1 is a schematic diagram of a grid framework structure according to a known system,
Figure 2 is a schematic diagram of a top down view showing a stack of bins arranged within the framework structure of Figure 1.
Figure 3 is a schematic diagram of a system of a known load handling device operating on the grid framework structure.
Figure 4 is a schematic perspective view of the load handling device showing the lifting device gripping a container from above.
Figure 5(a) and 5(b) are schematic perspective cut away views of the load handling device of Figure 4 showing (a) a container accommodated within the container receiving space of the load handling device and (b) the container receiving space of the load handling device.
Figure 6 is a perspective view of a portion of the grid framework structure.
Figure 7 is a perspective view of a cap plate for interconnecting the upright members to the grid members at their upper ends according to the present invention.
Figure 8 is a schematic representation of cross-sectional view of the interconnection of the upright columns or members to the grid members in the grid framework structure according to an embodiment of the present invention.
Figure 9 is a perspective view of a track element according to the present invention.
Figure 10 is a perspective view showing the arrangement of the upright members forming vertical storage column or grid columns for containers to be stacked between the upright columns according to an embodiment of the present invention.
Figure 11 is cross-section view of the storage column shown in Figure 10.
Figure 12 is a perspective view of an adjustable foot according to an embodiment of the present invention.
Figure 13 shows a perspective view of the insert portion or cap of the adjustable foot according to the embodiment of the present invention.
Figure 14(a to c) is a schematic view of a braced tower according to an embodiment of the present invention.
Figure 15 is (a) is a top plan view showing the layout of the grid framework structure in a typical fulfilment centre, and (b) a side view model of the fulfilment centre according to an embodiment of the present invention
Figure 16 is a perspective view showing the arrangement of the upright members forming vertical storage locations or grid columns for containers to be stacked between the upright columns according to an embodiment of the present invention.
Figure 17 is a perspective side view of a stack of storage containers within a storage column according to the present invention.
Figure 18 is a perspective view of (a) of the solid walled panel showing the internal frame structure, and (b) the laminated arrangement of the outer skin on the internal frame structure of the solid walled panel according to the present invention.
Figure 19 is a perspective view of a portion of the grid framework structure stabilised by the solid walled panels according to the present invention.
Figure 20 is a perspective view of the supporting framework structure showing the arrangement of the solid walled panels in two perpendicular directions according to the present invention.
Figure 20b is a schematic drawing of a top plan view of the spatial distribution of the first and second sets of solid walled panels according to the present invention.
Figure 21 is a perspective view of a section of the grid framework system comprising the grid framework structure supported by the solid walled panel according to the present invention.
Figure 22 is a perspective view showing the uppermost portion of the solid walled panel being support to the grid structure according to the present invention.
Figure 23 is a perspective view of a second type cap plate for securing the uppermost portion of the solid walled panel to the grid structure according to the present invention.
Figure 24 is a perspective view showing the connection between the second type cap plate and the uppermost portion of the solid walled panel according to the present invention.
Figure 25 is a perspective view of (a) the underside of the second type cap plate showing the connections of the grid members in one direction, and (b) the securement of the uppermost portion of the solid walled panel in the other direction according to the present invention.
Figure 26 is a perspective view of lowermost portion of the solid walled panel anchored to the substructure according to the present invention.
Figure 27 is a perspective view of the bracket for anchoring the lowermost portion of the solid walled panel to the substructure according to the present invention.
Figure 28 is a schematic representation of (a) the applied forces acting on the solid walled panel of a single width; and (b) the applied forces acting on the solid walled panel of a double width.
Figure 29 is a schematic representation of (a) the applied forces acting on the solid walled panel of a single width; and (b) the applied forces acting on multiple solid walled panels with a total width double of the signal width solid walled panel.
Figure 30 is a perspective view of (a) a solid walled panel having a width extending across three grid cells, and (b) a solid walled panel having a width extending across four grid cells.

### Detailed Description

### Grid Framework Structure

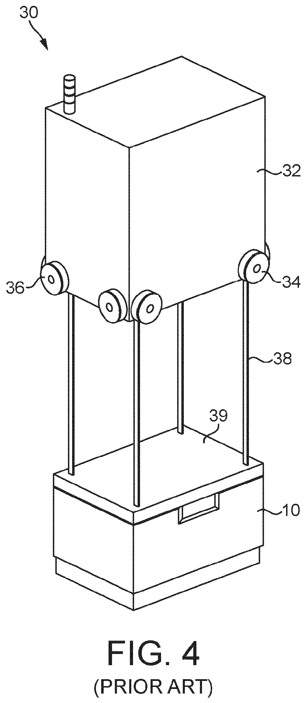

It is against the known features of the storage system such as the grid framework structure and the load handling device described above with reference to Figures 1 to 5, that the present invention has been devised. Figure 6 shows a perspective view of a traditional grid framework structure 114 used for the storage and retrieval of storage containers (otherwise known as totes). The basic components of the grid framework structure 114 comprise a grid structure 40 lying in a horizontal plane mounted to a plurality of upright columns or upright members 116 defining a supporting framework structure 214b. The terms "upright member(s)" and "upright column(s)" and "vertical column(s)" are used interchangeably in the description to mean the same thing or feature. As shown in Figure 6, the grid structure 40 comprises a series of horizontal intersecting beams or grid members 118, 120 arranged to form a plurality of rectangular frames 54. More specifically a first a set of grid members 118 extend in a first direction X and a second set of grid members 120 extend in a second direction Y, the second set of grid members 120 running transversely to the first set of grid members 118 in a substantially horizontal plane. The first and second sets of grid members support a first and a second set of tracks 57a, 57b respectively, for a load handling device to move one or more containers on the grid framework structure. For the purpose of explanation of the present invention, the intersections 56 constitute nodes of the grid structure. Each of the rectangular frames 54 constitute a grid cell and are sized for a remotely operated load handling device or bot travelling on the grid framework structure to retrieve and lower one or more containers stacked between the upright columns 116.

Each of the grid members of the present invention can comprise a track support 118, 120 and/or a track or rail 22a, 22b whereby the track or rail 22a, 22b is mounted to the track support 118, 120. A load handling device is operative to move along the track or rail 22a, 22b of the present invention. Alternatively, the track 22a, 22b can be integrated into the track support 118, 120 as a single body, e.g. by extrusion. In the particular embodiment of the present invention, the grid member comprises a track support 118, 120 and/or a track 22a, 22b whereby the track or rail 22a, 22b is mounted to the track support 118, 120. At least one grid member in a set, e.g. a single grid member, can be sub-divided or sectioned into discrete grid elements that can be joined or linked together to form a grid member 118, 120 extending in the first direction or in the second direction. Where the grid members comprises a track support, the track support can also be sub-divided into discrete track support elements in both the first and second directions that are linked together to form the track support. The discrete track support elements making up a track support extending in the first axial direction and in the second axial direction.

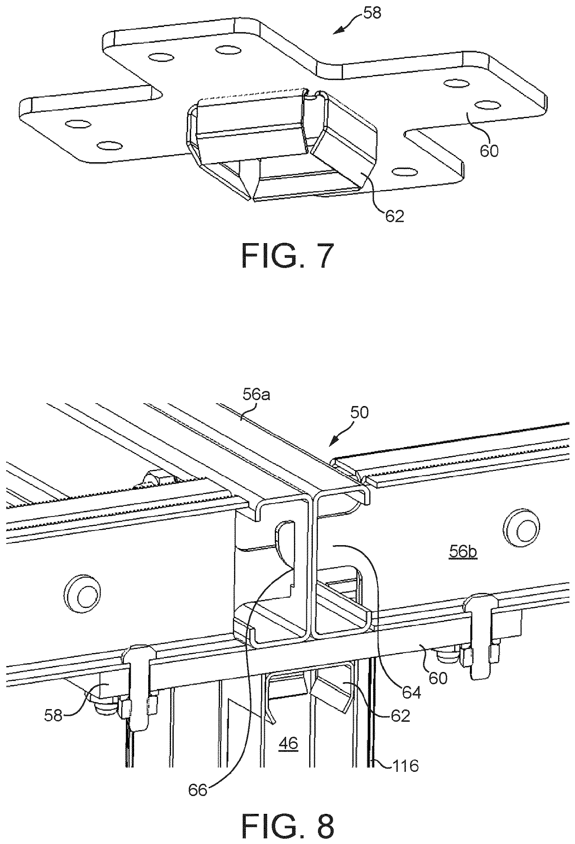

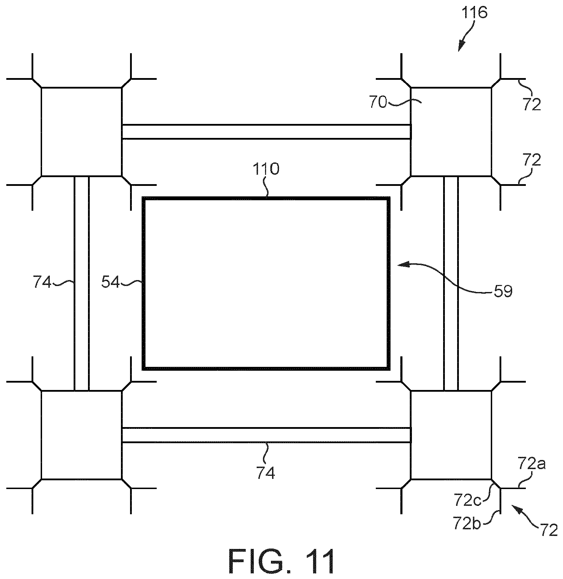

A connection plate or cap plate 58 as shown in Figure 7 can be used to link or join the individual track support elements 56a, 56b together in both the first and the second direction at the junction where multiple track support elements cross in the grid structure 40 (see Figure 8), i.e. the cap plate 58 is used to connect the track support elements 56a, 56b together to the uprights members 116. As a result, the upright members 116 are interconnected at their upper ends at the junction where the multiple track support elements 56a, 56b cross in the grid structure by the cap plate 58, i.e. the cap plate is located at the node 50 of the grid structure 40. As shown in Figure 7, the cap plate 58 is cross shaped having four connecting portions 60 for connecting to the ends or anywhere along the length of the track support elements 56a, 56b at their intersections 50. The interconnection of the track support elements to the upright members 116 at the nodes 50 by the cap plate 58 is demonstrated in the cross-sectional profile of the node 50 shown in Figure 8. The cap plate 58 comprises a spigot or protrusion 62 that is sized to sit in the hollow central section 46 of the vertical upright 116 in a tight fit for interconnecting the plurality of upright members 116 to the track support elements as shown in Figure 8. Also shown in Figure 8 are the track support elements 56a, 56b extending in both perpendicular directions corresponding to the first direction (x-direction) and the second direction (y-direction). The connecting portions 60 are perpendicular to each other to connect to the track support elements 56a, 56b extending in the first direction and in the second direction. The cap plate 58 is configured to be bolted to the ends of the track support elements 56a, 56b or along the length of the track support elements. Each of the track support elements 56a, 56b are arranged to interlock with each other at the nodes to form the grid structure 40 according to the present invention. To achieve this, distal or opposing ends of each of the track support elements 56a, 56b comprise locking features 64 for interconnecting to corresponding locking features 66 of adjacent track support elements. In the particular embodiment of the present invention, opposing or distal ends of one or more track support elements comprise at least one hook or tongue 64 that is receivable in openings or slot 66 midway of an adjacent track support element 56 at the junction where the track support elements cross in the grid structure 40. Referring back to Figure 8 in combination with Figure 11, the hooks 64 at the end of a track support element 56 are shown received in an opening 66 of an adjacent track support element extending across a vertical upright 16 at the junction where the track support elements 56 cross. Here, the hooks 64 are offered up to an opening 66 either side of a track support element 56b. In the particular embodiment of the present invention, the opening 66 is half way along the length of the track support element 56 so that when assembled together, adjacent parallel track support elements 56 in the first direction and in the second direction are offset by at least one grid cell.

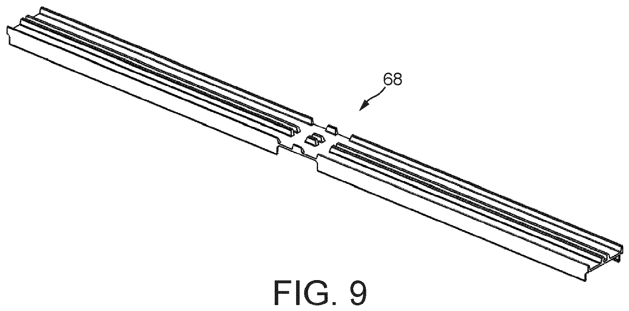

To complete the grid structure 40 once the track support elements are interlocked together to form a grid pattern comprising track supports 118 extending in the first direction and track supports 120 extending in the second direction, a track system 22a, 22b is mounted to the track support elements 56. The track system 22a, 22b is either snap-fitted and/or fitted over the track support 18, 20 in a slide fit arrangement. Like the track support of the present invention, the track system comprises a first set of tracks 22a extending in the first direction and a second set of tracks 22b extending in the second direction, the first direction being perpendicular to the second direction. Equally plausible in the present invention is that the track system 22a, 22b can be integrated into the track supports 18, 20 rather than being separate components. The first set of tracks 22a can be sub-divided into multiple track elements 68 in the first direction such that when assembled adjacent parallel track elements in the first direction are offset by at least once grid cell. Similarly, a second set of tracks 22b can be sub-divided into multiple track elements 68 in the second direction such that when assembled adjacent track elements in the second direction are offset by at least one grid cell. An example of a single track element 68 is shown in Figure 9. As with the track support elements, multiple track elements in the first direction and the second direction are laid together to form a track in both directions. The fitting of the track element 68 to the track support 118, 120 comprises an inverted U-shaped cross-sectional profile that is shaped to cradle or overlap the top of the track support 118, 120. One or more lugs extending from each branch of the U-shape profile engage with the ends of the track support 118, 120 in a snap fit arrangement.

The grid structure 40 is raised above ground level by being mounted to the plurality of upright members 116 at the intersections or nodes 56 where the grid members 118, 120 cross so as to form a plurality of vertical storage locations 59 for containers to be stacked between the upright members 116 and be guided by the upright members 116 in a vertical direction through the plurality of substantially rectangular frames 54. For the purpose of the present invention, a stack of containers can encompass a plurality of containers or one or more containers. The grid framework structure 114 can be considered as a rectilinear assemblage of upright columns 116 supporting the grid structure 40 formed from intersecting horizontal grid members 118, 120, i.e. a four wall shaped framework. Each of the upright members 116 is generally tubular. In transverse cross-section in the horizontal plane of the storage location 59 in Figure 11, each of the upright members 116 comprises a hollow centre section 70 with one or more guides 72 mounted to or formed to at least one wall of the upright column 116 that extends along the longitudinal length of the upright column 116 for guiding the movement of the containers. Typically, the hollow centre section 70 is a box section. The guides comprises two perpendicular plates 72a, 72b (two container guiding plates perpendicular to each other) that extend longitudinally along the length of the upright column 116.

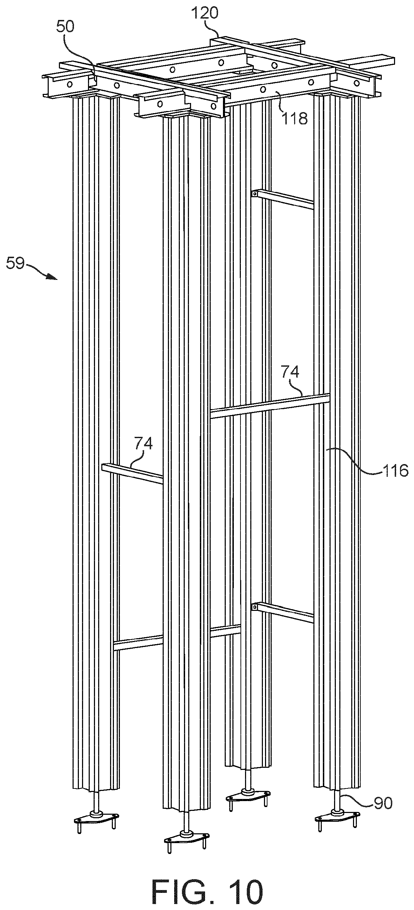

At least a portion of the plurality of the upright columns 116 are held in space relation with each other in the grid framework structure by one or more spacers or struts 74 connected between adjacent upright columns 116 (see Figure 10). The spacers 74 extend transversely to (or perpendicular to) the longitudinal direction of the upright column 116 and are bolted or riveted to opposing walls of two adjacent upright columns by one or more bolts or rivets. The lengths of the spacers or struts 72 are sized such that adjacent upright columns 116 are spaced apart sufficiently to occupy one or more containers in a stack between the upright columns 116. Figure 10 and 11 shows a perspective view of four upright columns 116 held in spaced apart relation with each other by one or more spacers or struts 74 to form a storage column or storage location 59 that is sized to accommodate one or more containers in a stack.

The spacers 74 are sized to fit between the corner sections comprising the guides 72 of the upright column 116 so as to allow the upright columns to accommodate a stack of containers between the adjacent upright columns 116, i.e. the spacers do not impede or cross the area (or vertical storage location) occupied by the guides 72 or guiding plates at the corners of the upright column (see Figure 11). One or more spacers/struts 74 are distributed in spaced apart relation along the length of two adjacent upright columns 116 in the grid framework structure (see Figure 10). Figure 10 and 11 shows an example of a storage location or storage column of the present invention for occupying one or more containers in a stack comprising four adjacent upright columns held in spaced apart relation within the grid framework structure by one or more spacers or struts 74.

It is essential that the level of the grid in the horizontal plane is substantially flat for the load handling devices, which are largely remotely operated, to travel on the grid structure and to prevent any of the tracks or rails being put under strain due to a variation in the height of one or more of the upright members 116 in the grid framework structure. To mitigate the possible height variation of one or more of the upright columns 116 in the grid framework structure, the height of the grid, and thus its level, is adjusted by an adjustable foot 90 at a lower end (first end) of one or more of the upright columns 90 (see Figure 10).

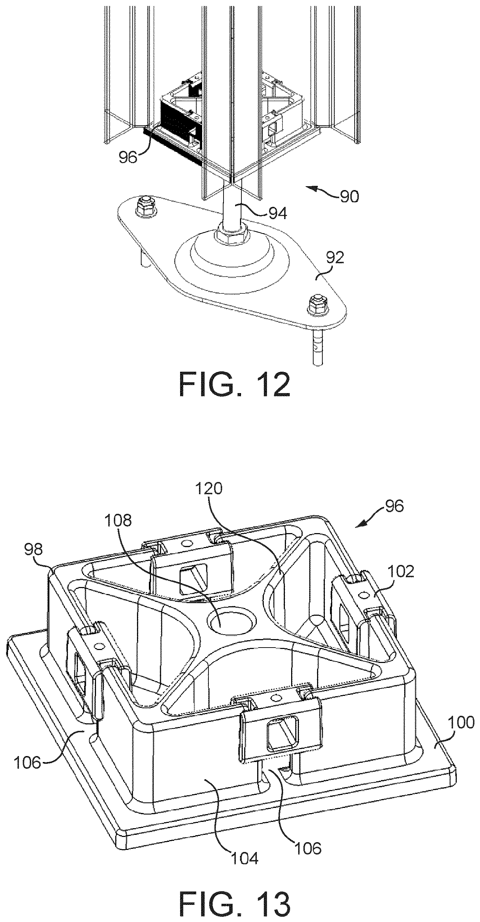

The adjustable foot 90 as shown in Figure 12 comprises a base plate 92 and a threaded spindle or rod 94 that is threadingly engageable with a separate push fit cap or plug 96 as shown in Figure 13. The push fit cap 96 is arranged to be fitted to the lower end of the upright member 116 in a tight fit so as to adjust the height of the upright member. The push fit cap 96 as shown in Figures 13 comprises an insert portion 98 that is shaped to be inserted into the hollow centre section of the upright member. A lip 100 is formed around the periphery of the insert portion 98 that is arranged to butt up against the rim of the hollow centre section 70 when the insert section 98 is received within the hollow centre section of the upright column. The push fit cap or plug 96 comprises one or more compression clips or retaining clips 102 arranged around the insert portion 98 so as to form a tight fit when the insert portion 98 of the push fit cap or plug 96 is inserted into the hollow centre section 70 of the upright column 116. In the particular embodiment of the present invention, the insert portion 98 is shaped to form a tight fit when Figure 10 and 11 shows a perspective view of four upright columns 116 held in spaced apart relation with each other by one or more spacers or struts 74 to form a storage column or storage location 58 that is sized to accommodate one or more containers in a stack.

The spacers 74 are sized to fit between the corner sections comprising the guides 72 of the upright column 116 so as to allow the upright columns to accommodate a stack of containers between the adjacent upright columns 116, i.e. the spacers do not impede or cross the area (or vertical storage location) occupied by the guides 72 or guiding plates at the corners of the upright column (see Figure 11). One or more spacers/struts 74 are distributed in spaced apart relation along the length of two adjacent upright columns 116 in the grid framework structure (see Figure 10). Figure 10 and 11 shows an example of a storage location or storage column of the present invention for occupying one or more containers in a stack comprising four adjacent upright columns held in spaced apart relation within the grid framework structure by one or more spacers or struts 74.

It is essential that the level of the grid in the horizontal plane is substantially flat for the load handling devices, which are largely remotely operated, to travel on the grid structure and to prevent any of the tracks or rails being put under strain due to a variation in the height of one or more of the upright members 116 in the grid framework structure. To mitigate the possible height variation of one or more of the upright columns 116 in the grid framework structure, the height of the grid, and thus its level, is adjusted by an adjustable foot 90 at a lower end (first end) of one or more of the upright columns 90 (see Figure 10).

The adjustable foot 90 as shown in Figure 12 comprises a base plate 92 and a threaded spindle or rod 94 that is threadingly engageable with a separate push fit cap or plug 96 as shown in Figure 13. The push fit cap 96 is arranged to be fitted to the lower end of the upright member 116 in a tight fit so as to adjust the height of the upright member. The push fit cap 96 as shown in Figures 13 comprises an insert portion 98 that is shaped to be inserted into the hollow centre section of the upright member. A lip 100 is formed around the periphery of the insert portion 98 that is arranged to butt up against the rim of the hollow centre section 70 when the insert section 98 is received within the hollow centre section of the upright column. The push fit cap or plug 96 comprises one or more compression clips or retaining clips 102 arranged around the insert portion 98 so as to form a tight fit when the insert portion 98 of the push fit cap or plug 96 is inserted into the hollow centre section 70 of the upright column 116. In the particular embodiment of the present invention, the insert portion 98 is shaped to form a tight fit when inserted into the box section of the upright column. To create a tight fit between the insert portion 98 and the hollow centre section of the upright column 116, the insert portion 98 comprises four walls 104 with one or more cut outs 106 in each of the walls 104 to seat one or more of the retaining clips or compression clips 102. The one or more retaining clips 102 can be composed of a resilient material, e.g. rubber. Together with the retaining clips 102, the insert portion 98 is slightly oversized relative to the hollow centre section 70 (which is a box section) of the upright column 116 so as to form a tight fit when the insert portion 98 is inserted into the box section 70 of the upright column 116. Another way of describing the push fit cap or plug 96 is that it comprises four corner sections, wherein each of the four corner sections comprises two perpendicular strips or plates that are arranged at a corner of a base plate of the push fit or plug 96. Spaces between the corner sections are sized to receive one or more retaining clips 102.

The push fit cap 96 comprises a threaded hole 108 to threadingly engage with the threaded spindle 94 of the adjustable foot 90. One or more webs 120 extending from each apex of the corner sections to the threaded hole 108 reinforce the structural integrity of the push fit cap 96. The push fit cap 96 of the present invention can fabricated from metal or other suitable material, e.g. metal, plastics, ceramic, and can be formed from separate parts, preferably formed as a single body, e.g. casting or moulding. In use, the threaded spindle 94 threadingly engages with the threaded hole 108 of the push fit cap 96. Rotation of the threaded spindle 94 varies the distance between the base plate 92 resting on the floor and the push fit cap 96 and thereby varies the height of the upright member in the grid framework structure.

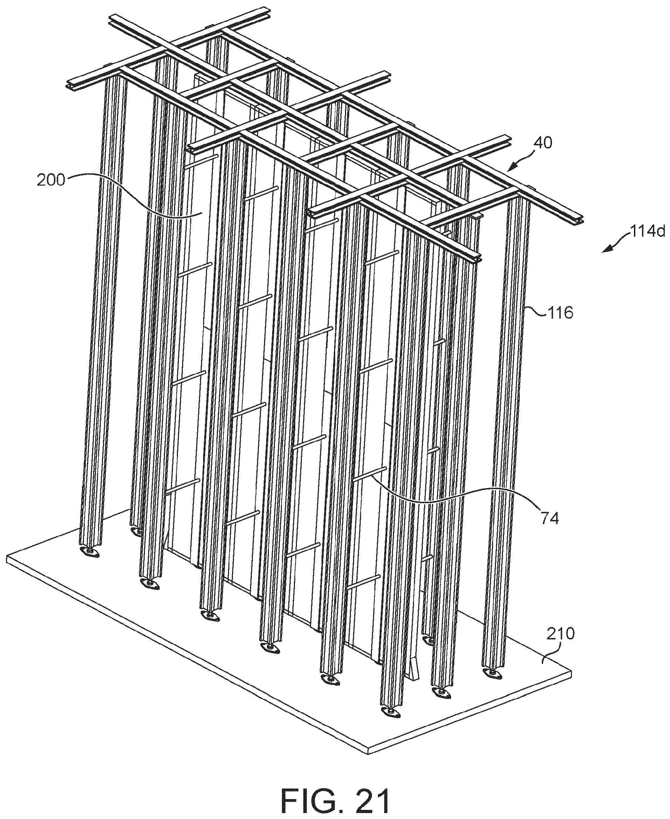

The grid framework structure 114 can be considered as a free standing (or self-supporting) rectilinear assemblage of a plurality of upright members 116 supporting the grid structure formed from intersecting horizontal beams or grid members, i.e. a four wall shaped framework. While the spacers or struts 74 connecting adjacent upright columns 116 provide some degree of structural rigidity of the grid framework structure 114, structural rigidity and moment resistance of the grid framework structure is largely provided by incorporating one or more truss assemblies or braced towers 80 at least partially around the periphery and/or within the body of the grid framework structure (see Figure 6). The truss assembly may have a triangular or other non-trapezoidal shape. For example, the truss assembly can be any type of truss that provides structural rigidity to the grid framework structure against lateral forces including but are not limited to Warren Truss or a K Truss or a Fink Truss or a Pratt Truss or a Gambrel Truss or a Howe Truss. Bolts or other suitable attachment means may be used to secure the diagonal braces to the upright columns. Different forces act on the supporting framework structure during ground movement and include but are not limited to uplift forces which is any upward pressure experienced by one or more of the plurality of upright members anchored to a substructure. In the particular embodiment of the present invention, the substructure is separate to the grid framework structure 114 and the grid framework structure 114 rests on the substructure 210. For avoidance of doubt, the grid framework structure 114 and the substructure 210 are collectively termed a grid framework system 114d (see Figure 21). The substructure can, optionally, be considered as part of the grid framework structure and is the area where the grid framework structure transfers the load of the grid framework structure and isolates it horizontally from the ground. The substructure includes the foundations and is typically composed of concrete. Other forces include shear forces and torsional forces. Shear forces are a result of horizontal forces acting on the supporting framework structure. This has the effect of exposing the anchorage of the substructure to shear forces. Where the ground is sufficiently stable for anchoring the grid framework structure to, the substructure can also include the ground itself.

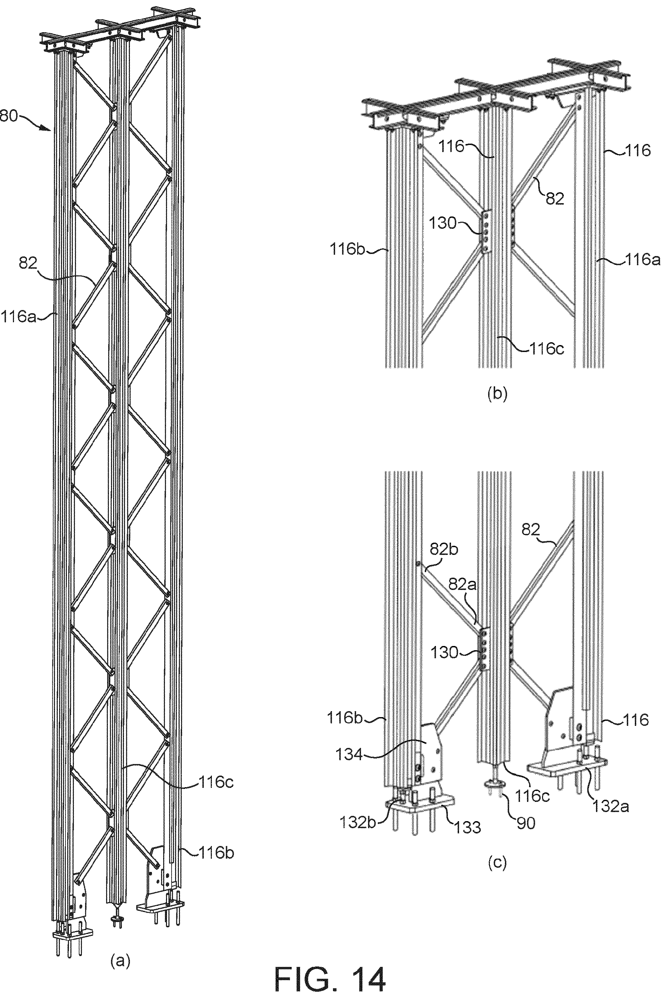

The braced tower 80 as shown in Figure 14 can be formed by rigidly joining a subset or sub-group of the plurality of upright members 116 by one or more angled or diagonal braces or diagonal bracing members 82. The diagonal braces 82 cooperate with the upright members 116 in a braced tower 80 to form one or more triangles. The subset of the plurality of upright members that are braced together to form the braced tower 80 can be two or more adjacent upright members 116 lying in a same or in a single vertical plane and joined together by one or more diagonal braces 82. Putting it another way, two or more adjacent upright members 116 connected by one or more diagonal braces 82 lie in the same or single vertical plane, i.e. they are co-planar. Typically, each of the braced towers 80 comprises three upright members in parallel relation and lie in a single vertical plane (co-planar) that are rigidly connected together by a plurality of diagonal braces 82. Two of the three upright members 116a, 116b are laterally disposed either side of a middle upright member 116c and the two laterally disposed upright members 116a, 116b are rigidly connected to the middle upright member 116c by a plurality of diagonal braces 82. By bracing one or more sub-groups of the upright members 116 internally within the grid framework structure by one or more diagonal braces 82, the structural rigidity of the grid framework structure is improved. Not all of the upright members 116 are rigidly connected together by a bracing assembly. The remaining upright members that do not form part of the braced tower 80 are held in space relation within the grid framework structure by one or more spacers or struts 74 as discussed above (see Figure 10).

One or more braced towers 80 are anchored to a concrete foundation or substructure. The braced towers 80 function to transfer the lateral forces experienced by the grid framework 50 to the floor. The braced towers 80 are anchored to the concrete foundation by one or more anchor feet 132(a and b) (see Figure 14). In the particular embodiment shown in Figure 14, the outer upright columns 116a, 116b or the laterally disposed upright members 116a, 116b are anchored to the concrete foundation by one or more anchor feet 132 and the middle upright member 116c is supported on an adjustable foot 90 as discussed above. The lower end (first end) of the braced tower is anchored to the concrete foundation by one or more anchor bolts. Various types of anchor feet 132a, 132b to rigidly anchor the braced tower to the concrete foundation are applicable in the present invention. The anchor foot functions to bear the upright member load and the bracing load of the bracing assembly 82 of the braced tower 80.

Upon receipt of an order, a load handling device operative to move on the tracks is instructed to pick up a storage bin containing the item of the order from a stack in the grid framework structure and transport the storage bin to a pick station whereupon the item can be retrieved from the storage bin and transferred to one or more delivery containers. Typically, the pick station comprises a container transport assembly to transport one or more containers to an access station where the contents of the containers can be accessed. The container transport assembly is typically a conveyor system comprising multiple adjacent conveyor units.

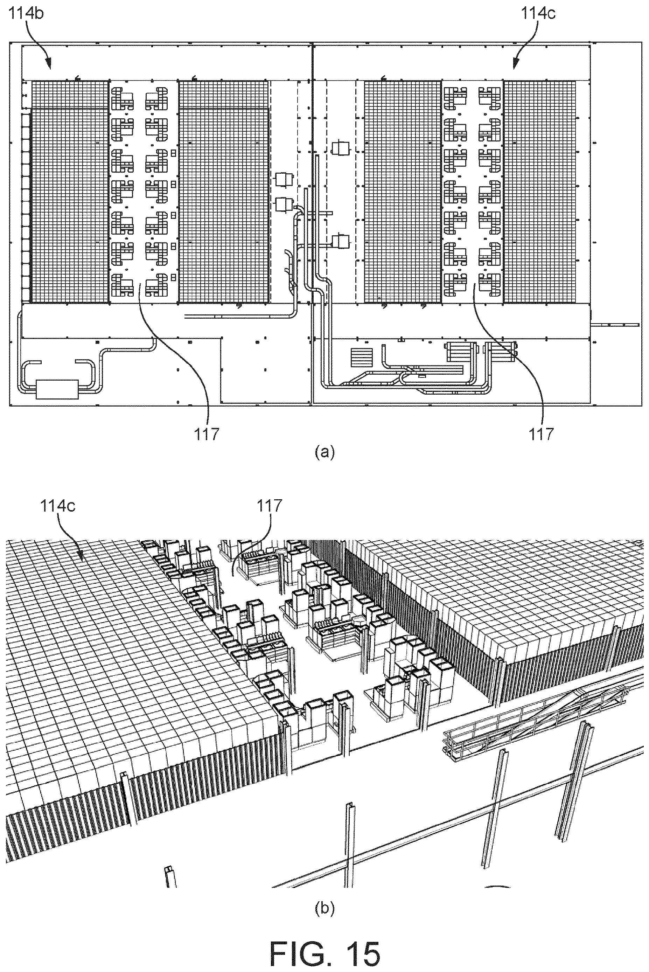

A typical layout of a fulfilment centre for fulfilment of an order is shown in Figure 15(a and b). The fulfilment centre comprises two distinct grid areas known as an ambient grid area 114b and a chill grid area 114c. Each of the ambient grid area 114b and the chill grid area 114c comprises a grid framework structure, i.e. the ambient grid area 114b comprises a first grid framework structure and the chill grid area 114c comprises a second grid framework structure. For the purpose of the present invention, the ambient grid area 114b stores food and grocery commodities at an ambient controlled temperature. For the purpose of the present invention, the ambient controlled temperature coves a range between substantially 4°C to substantially 21°C, preferably substantially 4°C to substantially 18°C. Likewise, the chill grid area 114c stores food and grocery commodities at a chilled temperature. For the purpose of the present invention, the chilled temperature covers a range between substantially 0°C to substantially 4°C. The chilled area 114c comprises one or more refrigerated chillers to main the temperature within the chilled area 114c in the region between substantially 0°C to substantially 4°C. The two grid areas - ambient and chill - are filled with containers (otherwise known as storage containers, totes, or bins) containing various grocery products. The containers may be plastic, or any other suitable material. Each grid area 114b, 114c can differ in height. For example, in the fulfilment centre illustrated in Figures 15a and 15b, the bulk of the ambient grid area comprises a 21 high container stack (approx. 7.7m), and the chill grid area comprises an eight high container stack (approx. 3.0m), with a region of the grid above the pick station comprising a stack one container high (approx. 448mm). The containers are stacked on the floor on top of each other and fit between the grid columns.

Each grid area comprises a tunnel 117 known as a pick aisle, which houses one or more pick stations for commodity items to be picked from the storage bins or containers and transferred to one or more delivery containers. Figure 15(b) shows a side view of the chill grid area 114c showing the pick aisle 117 between two grid areas. Whilst not shown in Figure 15(b), the tunnel pick aisle 117 is a separate area provided by incorporating a mezzanine supported by vertical beams in amongst adjacent grid framework structures. The mezzanine can be a standalone structure. The mezzanine provides a tunnel to accommodate, for example, a pick station.

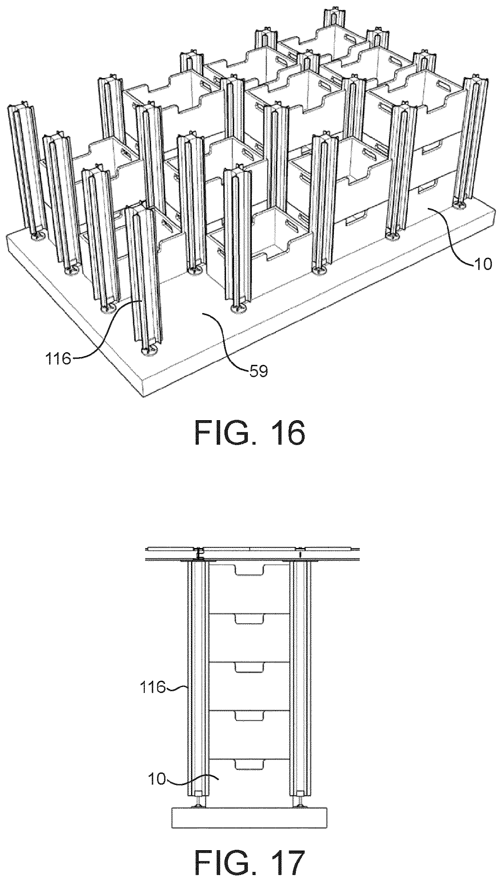

Storage containers or bins storing commodity and grocery items are transported by load handling devices operative on the grid structure to a pick station in the pick aisle 117, where one or more items are picked from the storage bin or container at the pick station and transferred to one or more delivery containers. Figure 16 shows a perspective view of the upright members 116 being arranged to form vertical storage locations 59 for containers 10 to be stored within the vertical storage locations 59. Figure 17 shows a representation of the vertical stack up of the containers 10 between the upright members 116.

As will be appreciated from the description above, a number of fasteners, e.g. bolts, are used to connect the different portions of the grid framework structure together. These include ensuring that the plurality of upright members are held in space relation within the grid framework structure, the interconnection between the grid members and the upright members and the connection on the bracing members to the sub-group of upright members in the braced towers. During ground movement, which can be caused by a seismic event or other external event, such fasteners may have a tendency to work their way loose and in an extreme case, lead to the collapse of the grid framework structure. Even with the incorporation of one or more braced towers within the supporting framework structure by bracing one or more sub-groups of the upright members together, braced towers may not be sufficient to stabilise the supporting framework structure and the grid structure mounted thereon from movement.

Movement of the supporting framework structure as a result of ground movement may also de-stabilise one or more robotic load handling devices operative on the grid structure. The wheel assembly of the robotic load handling device is configured to be guided along tracks. The rail or tracks typically comprise an elongated element which is profiled to guide a load handling device on the grid structure and are typically profiled to provide either a single track surface so as to allow a single load handling device to travel on the track or a double track so as to allow two load handling devices to pass each other on the same track. In the case, where the elongated element is profiled to provide a single track, the track comprises opposing lips (one lip on one side of the track and another lip at the other lip at the other side of the track) along the length of the track to guide or constrain each wheel from lateral movement on the track. In the case where the profile of the elongated element is a double track, the track comprises two pairs of lips along the length of the track to allow the wheels of adjacent load handling devices to pass each other in both directions on the same track. Due to the way the wheels of the robotic load handling device are constrained by the lips of the track, any sudden movement of the grid structure due to ground movement has the tendency to de-stabilise one or more robotic load handling devices on the grid structure and the possibility of causing one or more of the robotic load handling devices to decouple from the track and in an extreme case, topple on the grid structure. Destabilisation of the robotic load handling devices on the grid structure is thus dependent on the amplitude and/or frequency of vibration of the supporting framework structure, which is transmitted to the grid structure comprising the track system. The greater the amplitude of vibration of the supporting framework structure, the greater the likelihood that the robotic load handling devices operative on the track system would be de-stabilised.

### Solid Walled Panel

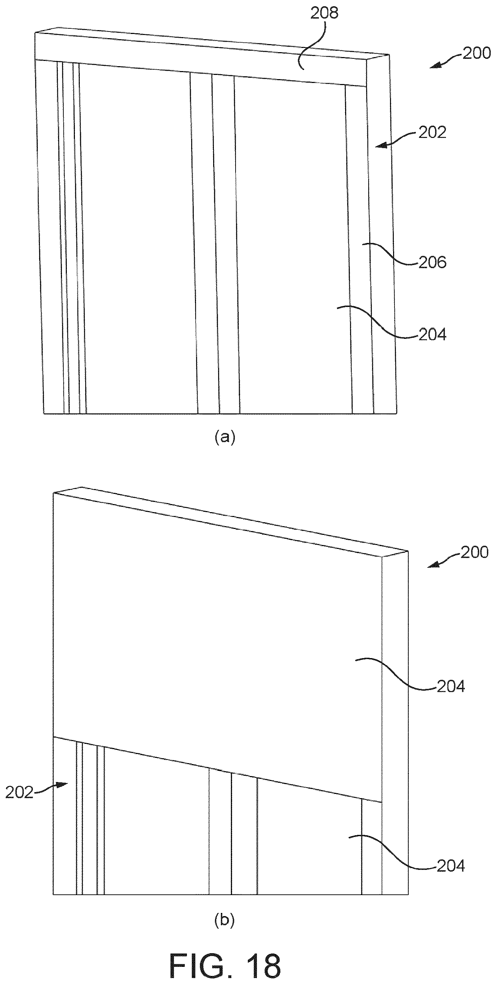

The present invention has mitigated the above problem by reinforcing the grid framework structure by incorporating a plurality of stiffener elements within the body of the grid framework structure. The plurality of stiffener elements can be incorporated amongst the one or more braced towers within the grid framework structure such that the stability of grid framework structure can be shared amongst the plurality of stiffener elements and the braced towers. The plurality of stiffener elements resist deformation in comparison to the braced towers discussed above, and thereby are able to reduce vibration of the grid structure during ground movement. To provide a stiffener element that resists deformation, the stiffener elements are provided by solid walled panels 200 (see Figure 18a and 18b). **In** comparison to the braced towers where the upright members are braced by one or more bracing members at discrete points vertically along the upright members, the solid walled panels provide continuous support along the length or height of the solid walled panel that extends from the substructure or foundation to the grid structure as well as support horizontally along the first and/or second direction (X-Y directions). Not only does the solid walled panels provides continuous lateral support, but the solid walled panels also provide increased torsional resistance in comparison to the braced towers. The solid walled panels can be monolithic in the sense that they are composed of a single material, e.g. metal, plastic, or can be based on a composite material comprising a combination of different materials to increase the structural rigidity of the solid walled panels, e.g. fibrous material dispersed in a resin matrix. In the particular embodiment of the present invention shown in Figure 18(a and b), the solid walled panel comprises a laminated panel comprising an inner core 202 sandwiched between outer sheet metallic plates 204. The inner core 202 comprises an internal frame structure having upwardly extending members 206 connected together at their respective top and bottom ends by horizontal structural frame members 208. In the particular embodiment of the present invention, the upwardly extending members 206 and the horizontal structural frame members 208 have a U-shaped cross sectional profile. The internal frame structure 202 is laminated at both sides by an outer skin 204 comprising sheet metal as shown in Figure 18b. The U-shaped profile of the upwardly extending members 206 and the horizontal structural frame members provide upper, lower and side flanges for attaching the outer skin 204 to the internal frame. In the particular embodiment of the present invention, the outer skin 204 is fixed to the outer surface of the internal frame structure. Alternatively, the U-shaped cross section profile of the upwardly extending members 206 and the horizontal structural frame members 208 can be configured as a channel to receive the edges of the outer skin 204. The components of the internal frame structure such as the upwardly extending members and the horizontal structural frame members can be composed of a metal structure, e.g. aluminium or steel, and fastened together using various fasteners commonly known in the art including but is not limited to bolts, rivets, welding, adhesive, or a combination of the different fasteners. The inner core of the solid walled panel is not just limited to an internal frame structure and can be based on any structurally integral construction including but not limited to metal, e.g. composite fibre reinforced material. For example, the inner core can be a solid walled panel and the upwardly extending members and the horizontal structural frame members are attached around the peripheral edge of the solid walled panel.

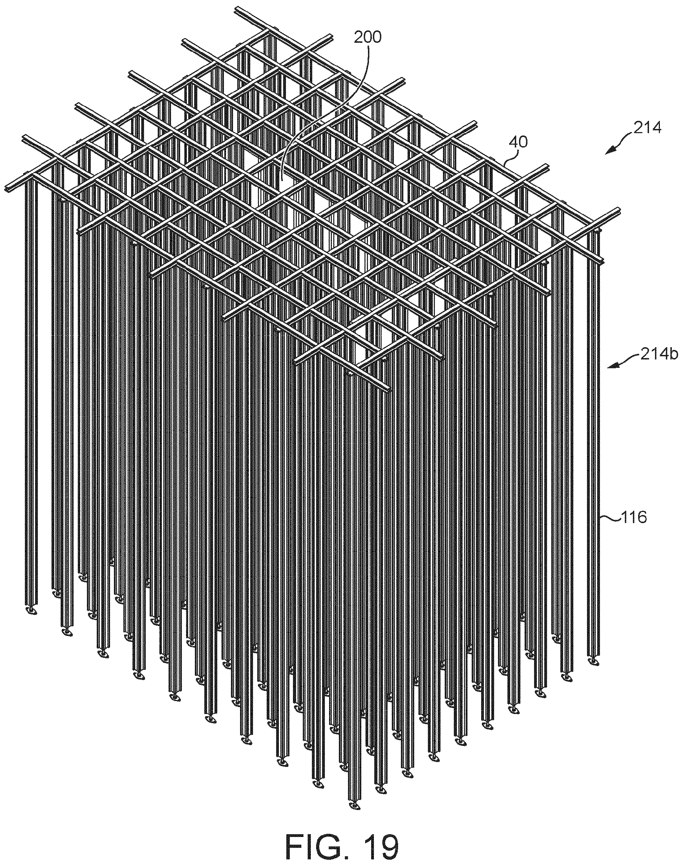

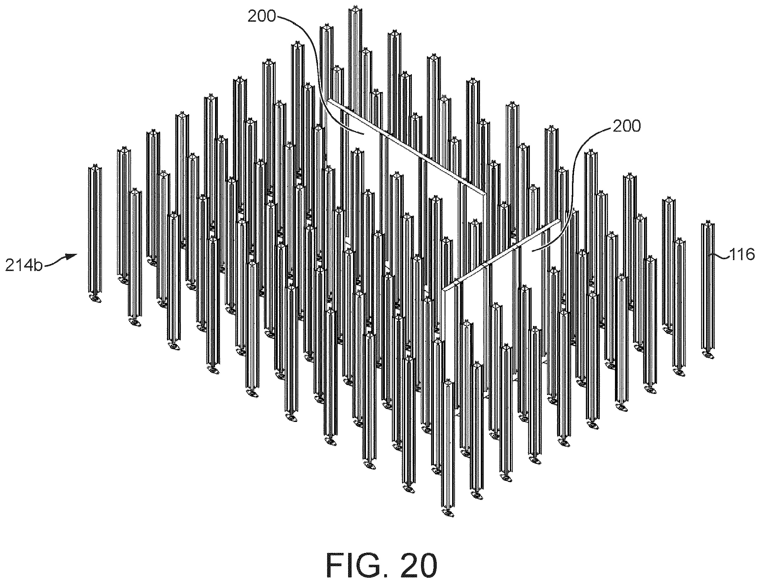

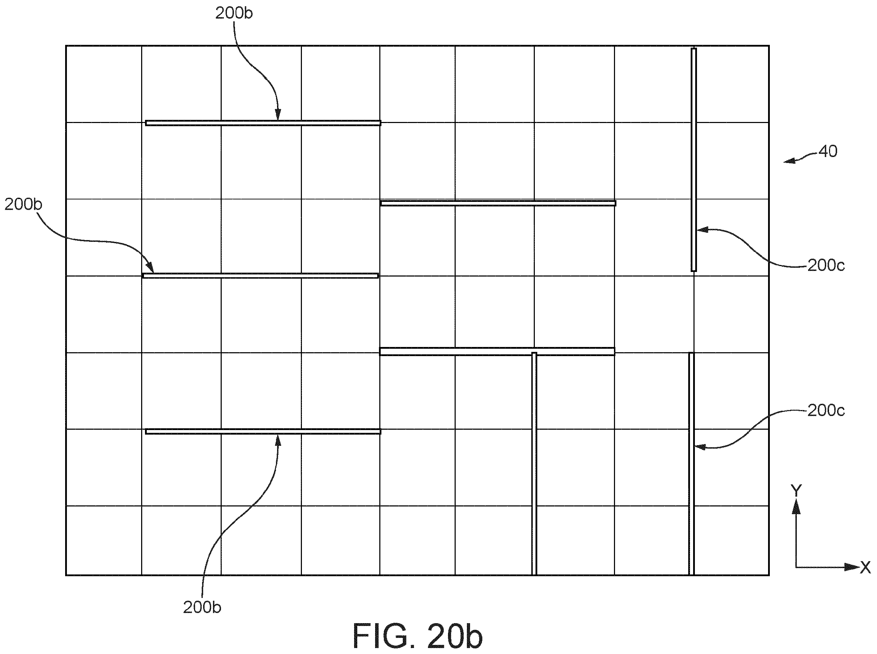

As with the braced towers discussed above with reference to Figure 14, the plurality of solid walled panels 200 are spatially distributed within the body of the supporting framework structure 214b as shown in Figures 19 and 20. The solid walled panels are shown as occupying discrete portions of the supporting framework structure 214b that are either spaced apart and/or separated by one or more of the plurality of the upright members 116. The spacing between neighbouring or adjacent solid walled panels controls the structural integrity of the supporting framework structure 214b and thus, the resistance of the supporting framework structure to deformation during ground movement. In some embodiments, the plurality of solid walled panels 200 comprises a first set of solid walled panels spatially distributed horizontally along the first direction and a second set of solid walled panels spatially distributed horizontally along the second direction, the first set of solid walled panels providing support from applied forces along the first direction and the second set of solid walled panels providing support from applied forces along the second direction. The first and second sets of solid walled panels are spatially distributed within the support framework structure 214b in the sense that they are separated from each other in discrete portions along the first direction and along the second direction. An example of the spatial distribution of the plurality of solid walled panels is shown in Figure 20b showing the first set of solid walled panels 200b extending in the X direction and the second set of solid walled panels 200c extending in the Y direction. Each of the first and/or second sets of solid walled panels 200b can lie in the same vertical plane or lie in different vertical planes. In the example shown in Figure 20b, one or more of the first and/or second sets of solid walled panels 200b, 200c lie in different vertical planes. The spatial distribution of the plurality of solid walled panels 200b, 200c in the X and Y direction is dependent on the level of support required for the grid framework structure which in turn is dependent on the underlying ground or soil. A greater density of the first and second sets of solid walled panels extending in either the X or Y direction or both will provide greater support to the grid framework structure. The density of the plurality walled panels extending in the first and/or second direction can be used to tune the support offered in the first and/or second direction of the grid framework structure. The support offered in the first and/or second direction can thus be varied by controlling the density of the plurality walled panels extending in the first and/or second direction. In the particular example shown in Figure 20b, a higher density of the solid walled panels extend in the X direction than in the Y direction. However, the pattern of the solid walled panels spatially distributed within the supporting framework structure is not just limited to the pattern shown in Figure 20b and other patterns that provides different level of support to the grid framework structure are applicable in the present invention.

As can be appreciated from the schematic drawing of the grid framework structure, a portion of the supporting framework structure comprising the assemblage of the upright members 116 is replaced by the plurality of solid walled panels. For example, one or more of the plurality of upright members spatially distributed along the first and/or second direction are replaced by the solid walled panels 200 of the present invention whilst still preserving the vertical storage columns for the storage of stack of storage containers as demonstrated in Figure 20. In other words, the plurality of solid walled panels 200 are distributed within the supporting framework structure 214b so that they do not intersect the area within the storage columns. In the particular embodiment of the present invention shown in Figure 21, each of the plurality of the solid walled panels are held in spatial relation amongst the upright members by one or more spacers 74 extending from the upright members 116 to the solid walled panels 200. The one or more spacers 74 extend between the upright members and the internal frame structure of the solid walled panel. The one or more spacers are shown in Figure 21 extending in a substantially perpendicular direction to the longitudinal length of the upright members either side of the solid walled panels.

Also shown in Figure 21, is that the length or height of the solid walled panel 200 extends between the substructure 210 and the grid structure 40 comprising the track system. As the solid walled panels 200 replace a portion of the upright members 116 in the supporting framework structure 214b, and since the plurality of upright members 116 are load bearing in the sense of supporting the track system for one or more robotic load handling devices operative on the track system, the solid walled panels according to the present invention are also load bearing. The internal frame structure of the solid walled panels discussed above, in particular the upwardly extending frame members 206, are load bearing so as to support the track system and one or more robotic load handling devices operative on the track system. To fix each of the plurality of solid walled panels 200 within the grid framework structure, the lowermost portion of each of the plurality of solid walled panels is anchored to the substructure 210 and the upmost portion of each of the plurality of solid walled panels is supported to the grid structure 40 above. Various fasteners and/or brackets can be used to fix each of the plurality of solid walled panels to the substructure 210 and the grid structure 40 according to the present invention.

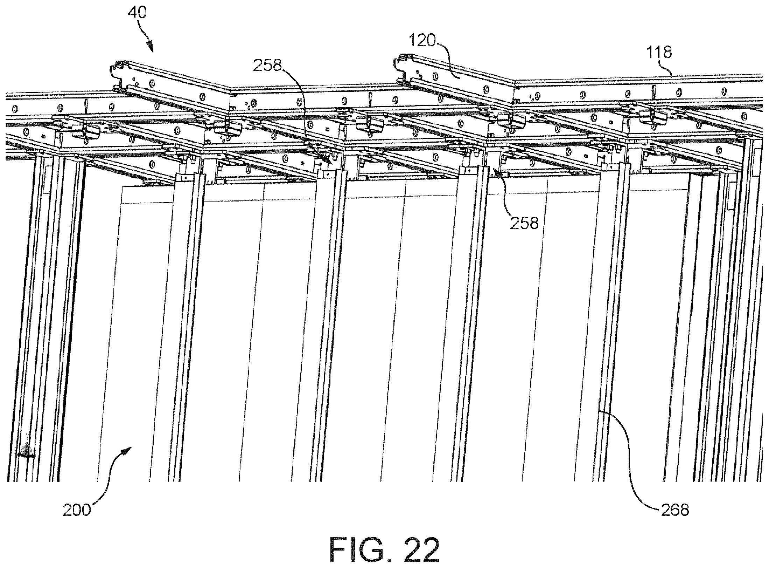

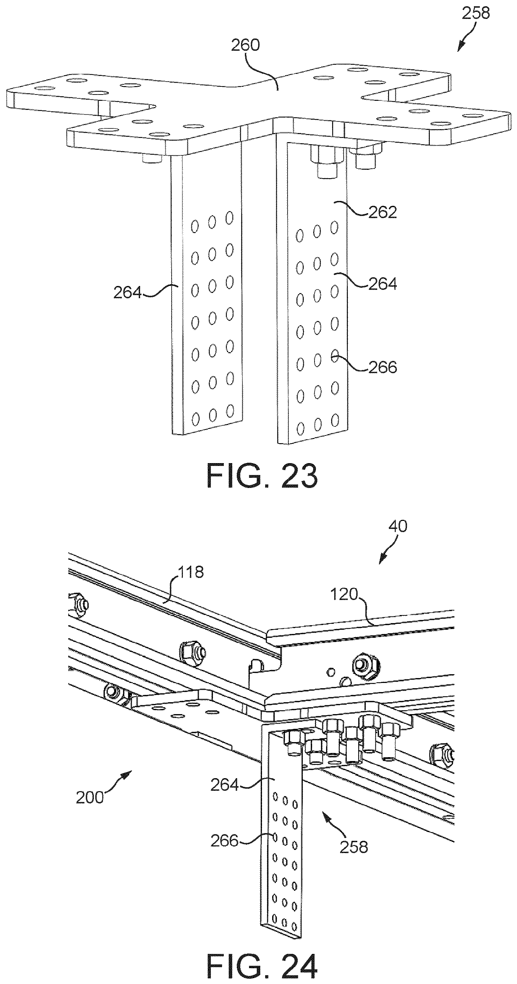

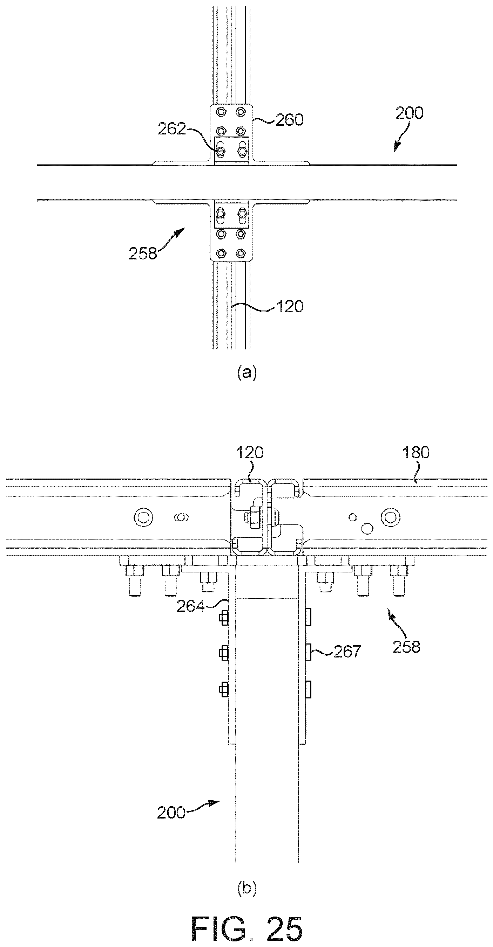

In the particular embodiment shown in Figure 22, the uppermost portion of the solid walled panel 200 is supported to the grid structure 40 by a second type cap plate 258 (see Figure 23 and 24). In comparison to the first type cap plate 58 shown in Figure 7 where the first type cap plate comprises a spigot 62 for being received into hollow box section 70 of the upright member 116, the second type cap plate 258 comprises a cross-shaped plate 260 and brackets 262 secured to the underside of the cross-shaped plate 260. Each of the brackets is L-shaped having downwardly extending bracket members 264 that are spaced apart corresponding to the thickness of the solid walled panel 200 for receiving the uppermost portion of the solid walled panel as shown in Figure 24. In the particular embodiment shown in Figure 24, each of the brackets 262 is bolted to the underside of the cross-shaped plate 260. The downwardly extending bracket members 264 are secured to the solid walled panel by having one or more openings 266 for receiving one or more bolts 267 as shown in the schematic drawing of the cross sectional view of the securement between the grid members and the second type cap plate in Figure 25b. The brackets function to clamp the uppermost portion of the solid walled panel to the second type cap plate. Like the first type cap plate 58 shown in Figure 7, the cross-shaped plate 260 comprises connecting portions for connecting to the grid members or track support elements extending in the first and/or second direction. The schematic drawing of the connection between the second type cap plate 258 with the solid walled panel 200 in Figure 25a shows the grid members 120 connected to the cross-shaped plate 260 extending in one direction, and the solid walled panel 200 extending in the other direction.

Instead of the downwardly extending members of the bracket being secured directly to the uppermost portion of the solid walled panel, in yet a further example of the securement of the uppermost portion of the solid walled panel to the grid structure by the second type cap plate, the downwardly extending members of the brackets are secured to securing members 268 mounted to opposing faces of the solid walled panels 200 as shown in Figure 22. The securing members 268 are shown in Figure 22 extending along the length or height of the solid walled panel 200 and are mounted to opposing faces of the solid walled panel. The upper portion of the securing members 268 comprises an opening for receiving the downwardly extending members 264 of the bracket 262. The securing members 268 mounted to the opposing faces of the solid walled panel function to clamp the solid walled panel when it is secured to the second type cap plate 258.

Both the first and second type cap plate have in common in that they are used to link or join the individual grid members 118, 120 together along the first and the second direction at the junction where multiple grid members cross in the grid structure 40, i.e. they are cross shaped having four perpendicular end portions for connecting with corresponding grid members extending in the first and second directions. Unlike the upright members being interconnected at their upper ends at the junction where the multiple grid members cross in the grid structure, i.e. where the first type cap plate 58 is located at the node 50 of the grid structure 40, each of the plurality of solid walled panels is secured to the grid structure at one or more nodes where the first and the second set of grid members intersect or meet in the grid structure by the second type cap plate 258. The number of second type cap plates 258 for securing the solid walled panel 200 to the grid structure is dependent on the width of the solid walled panel and how many of the grid cells the solid walled panel extends across. In the particular embodiment shown in Figure 22, the solid walled panel is shown extending across four grid cells in one direction; more specifically three grid cells and two half grid cells. As a result, at least one of the opposing ends or edges of the solid walled panel is a free end, i.e. not connected to an upright. This is clearly apparent in Figure 20. In Figure 20, the opposing ends or edges of the solid walled panel within the supporting framework structure are free ends or edges and it is a reflection that a majority of forces experienced by the grid framework structure from load handling devices operative on the grid structure are transferred to the substructure via the solid wall panels. The solid walled panel is secured to the grid structure by four second type cap plates 258 distributed at four nodes in the grid structure 40. Like the first type cap plate, the second type cap plate 258 is configured to be bolted to the ends of the grid members or along the length of the grid members.

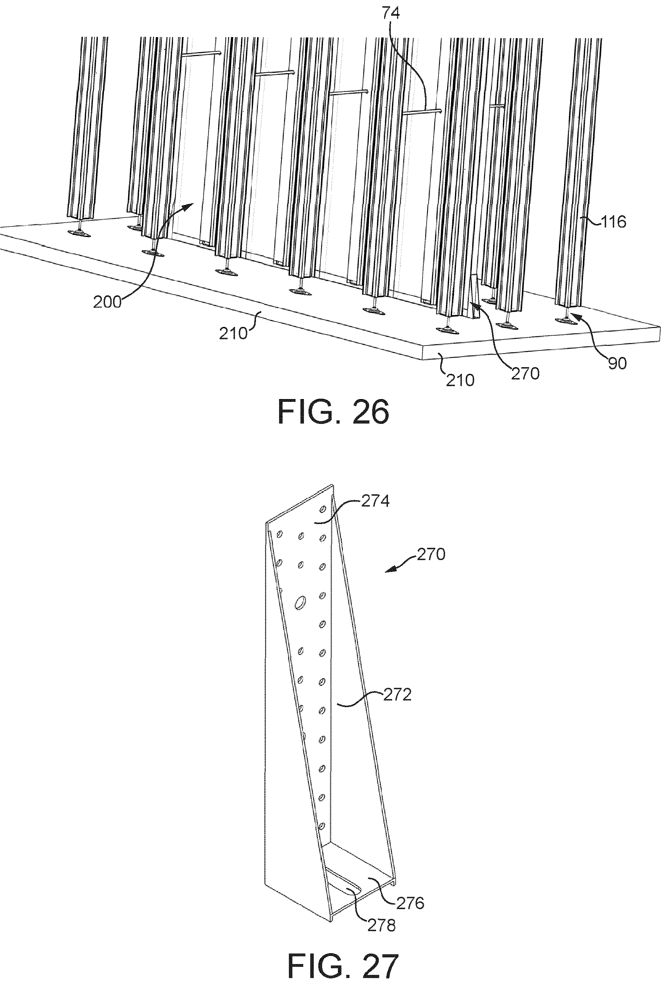

In addition to securing each of the plurality of solid walled panels to the grid structure, the lowermost portion of each of the plurality of solid walled panels can be anchored directly to the substructure. One or more bolts distributed along the width of the solid walled panel can be used to anchor the lowermost portion of the solid walled panel to the substructure. In the schematic drawing of the lower portion of the solid walled panel shown in Figure 26, corner brackets 270 are used to anchor the opposing lowermost corners of the solid walled panel 200 to the substructure 210. The corner brackets 270 are shown in Figure 27 comprising an anchor receiving portion 272 for receiving a fastener and anchoring the solid walled panel 200 to the substructure 210. The corner bracket 270 is secured to the corner of the solid walled panel by one or more bolts but other suitable fasteners for securing the corner bracket to the corner of the solid walled panel are also applicable in the present invention. The corner bracket 270 in the particular embodiment shown in Figure 27 is triangular in shape having an upward securing portion 274 for securing to an end wall of the solid walled panel and a lower securing portion 276 for anchoring the corner bracket 270 to the substructure 210. The lowermost securing portion 276 of the corner bracket comprises an opening 278 for receiving a bolt to anchor the corner bracket to the substructure. Also shown in Figure 26 is that the plurality of upright members 116 surrounding the solid walled panel are each mounted to an adjustable foot 90 discussed above for adjusting the height of the upright member and thus the level of the track system. Whilst not shown in Figure 26, the lowermost portion of the solid walled panel can be mounted to one or more adjustable feet for raising or lowering the solid walled panel relative to the substructure and thus, the level of the track system mounted on the solid walled panel. The one or more adjustable feet can be the same type of adjustable foot discussed above with reference to Figures 12 and 13 or can be another type of adjustable foot that is applicable for anchoring the lowermost portion of the solid walled panel to the substructure. For example, one or more threaded bolts can threadingly engage with the lowermost end of the solid walled panel and the substructure such that rotation of the one or more threaded bolts raises or lowers the solid walled panel relative to the substructure.

Whilst the particular embodiment shown in Figure 26 shows the solid walled panel being anchored to the substructure by corner brackets 270 mounted to opposing end walls at the lowermost portion of the solid walled panel, alternatively, a plurality of bolts that are spaced apart along the width of the solid walled panel can be used to anchor the solid walled panel to the substructure 210. Similarly, the present invention is not limited to the use of the second type cap plate comprising brackets for securing the uppermost portion of the solid walled panel to the grid structure; other means to secure the uppermost portion of the solid walled panel to the grid structure are applicable in the present invention. For example, the uppermost portion of the solid walled panel can be secured directly to the grid structure by one or more bolts.

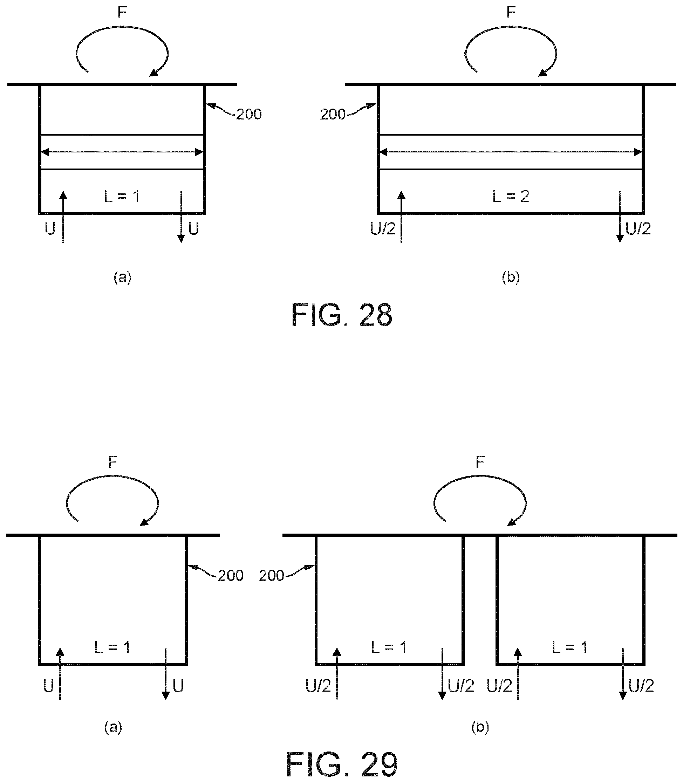

The components of the grid framework structure are subjected to a number of applied forces during ground movement. These applied forces can result in the shearing of the fasteners, e.g. bolts, anchoring the upright members to the substructure. In addition to the shear forces acting on the fasteners, there is also a component of the applied force as a result of ground movement generating an upward force acting to decouple the upright member from the substructure. In order to mitigate this effect, longer fasteners are used to anchor the upright members deeper into the substructure. However, this is very much dependent on the thickness or depth of the substructure and the underlying soil structure. In some circumstances, the underlying soil structure or ground would not permit a deep substructure to be installed. The use of the solid walled panels to stabilise the grid framework structure helps to mitigate this problem as one or more of the dimensions of the solid walled panel can be used to control the degree by which the solid walled panels would need to be anchored to the substructure. Figures 28 and 29 shows a schematic drawing of the uplift forces denoted by the reference U experienced by solid walled panels having a different width L as a result of the application of external forces F in the horizontal direction. Increasing the width L of the solid walled panel has the effect of reducing the uplift forces U experienced at the lowermost corners of the solid walled panel. In the particular example shown in Figure 28, doubling (L=2) the width of the solid walled panel has the effect of halving the uplift forces U/2 at the lowermost corners of the solid walled panel. Thus, the width of the solid walled panel is inversely proportional to the uplift forces at the lowermost corners of the solid walled panel. It is stipulated that the uplift lift forces experienced by the solid walled panel are as a result of moment of forces, and therefore increasing the width of the solid walled panel has the effect of reducing the uplift forces at the lowermost corners for a given moment. This can be better explained by the following equation: $F = U \times L$
where F is the moment and is based on the expected seismic activity;
U is the uplift force and is limited by how deep the solid walled panel is anchored to the substructure or foundation;
L is the width of the solid walled panel.

According to equation 1, the width of the solid walled panel is dependent on the expected moment of force and depth of anchorage of the solid walled panel to the substructure or foundation.

Reducing the uplift forces has the effect that shorter fasteners that would be needed to anchor the solid walled panel to the substructure, which in turn would mean that the width L of the solid walled panels can be tuned to the depth of the substructure and/or underlying soil conditions. Thus, for a shallow substructure or foundation, a greater width solid walled panel would be desired to mitigate decoupling the solid walled panels from the substructure as a result of uplift forces. Conversely, for a deep substructure or foundation then a smaller width solid walled panel would be feasible to mitigate decoupling the solid walled panels from the substructure as a result of uplift forces.

Whilst Figure 28(a and b) demonstrates that increasing the width of the solid walled panel effectively reduces the uplift forces experienced by the lowermost corners of the solid walled panels, the same effect can be achieved by breaking down the larger width solid walled panel into multiple discrete spaced apart solid walled panels such that the sum of the lengths of the individual solid walled panels is greater than the width of a single solid walled panel as demonstrated in Figure 29(a and b). Thus, instead of doubling the width of the solid walled panel as demonstrated in Figure 28b, two spaced apart solid walled panels of an equivalent overall width has the same effect as halving the uplift forces. In the particular embodiment shown in Figure 29(a and b), the uplift forces U are halved by providing two discrete solid walled panels of the same length. Thus, the total sum of the widths of the discrete solid walled panels is a multiple of the width of the single solid walled panel. The greater the number of discrete solid walled panels, the greater the reduction in the uplift forces in comparison to a single solid walled panel of a single length. The relationship between the uplift forces experienced by the solid walled panels and the number of discrete solid walled panels is better explained by the following equation: $F = U \times L \times N$
where F is the moment and is based on the expected seismic activity;
U is the uplift force and is limited by how deep the solid walled panel is anchored to the substructure or foundation;
L is the width of the solid walled panel; and
N is the number of discrete solid walled panels.

According to equation 2, for a given movement of force F, the uplift force U is reduced by increasing the number of discrete solid walled panels.

In addition to uplift forces, the external forces as a result of ground movement also generate shear forces in the direction of the applied forces. The fasteners used to anchor the solid walled panel to the substructure would need to be sufficiently strong to resist such shear forces. In the case where the fasteners are bolts, the shear resistance of the bolts is dependent on the cross-sectional diameter of the bolts. For increased shear resistance, larger cross-sectional diameter or thicker bolts are used to anchor the solid walled panel directly to the substructure. In the particular embodiment of the present invention, multiple bolts are distributed along the width of the solid walled panel to distribute the applied shear force. As a result, thinner bolts can be used as the shear force is distributed amongst multiple bots rather than a few bolts either end of the solid walled panel. The use of multiple bolts to anchor the solid walled panel directly to the substructure also helps to increase the anchorage of the solid walled panel to the substructure from uplift forces.

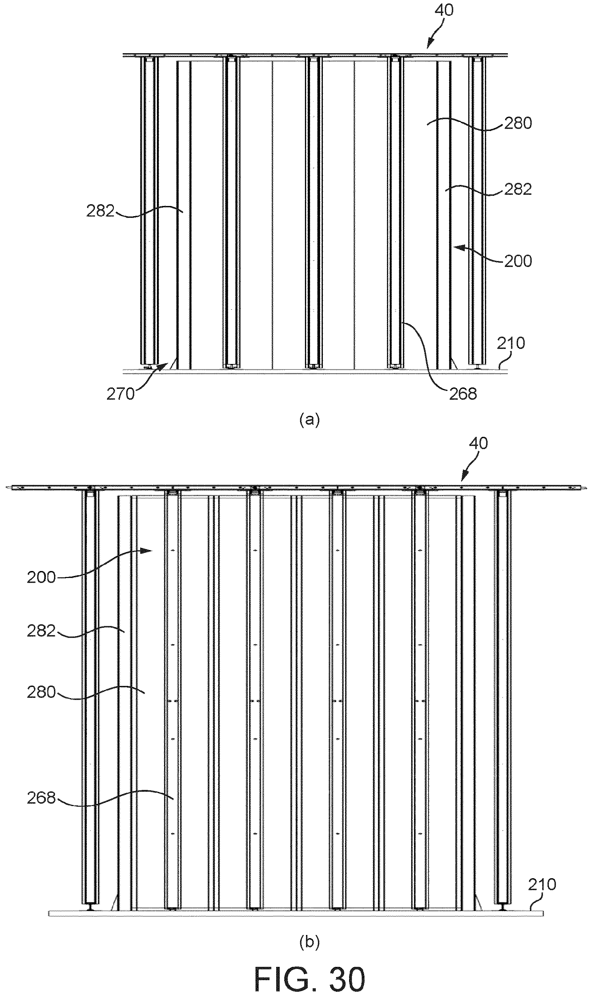

The solid walled panel can be based on a single solid walled panel that extends across one or more grid cells. In the particular embodiment of the present invention shown in Figure 30a and 30b, the solid walled panel 200 is modular, constructed from separate segments 280 joined together. Figure 30a is an example where the solid walled panel 200 is constructed from three solid walled segments joined together, and thus extends across three grid cells. Figure 30b is an example where the solid walled panel 200 is constructed from four solid walled segments 280, and thus extends across four grid cells. Each of the solid walled segments 280 can be based on a laminated structure discussed above having an inner core and an outer skin either side of the inner core. The inner core can be based on an internal frame structure having upwardly extending members connected together at their respective top and bottom ends by horizontal structural frame members as discussed above. Various fasteners commonly known in the art can be used to join each of the solid walled segments 280 together in a single solid walled panel, including but not limited to screws, bolts, adhesive, welding etc. Also shown in Figures 30a and 30b is that the opposing ends of each of the solid walled panels 200 comprise an end member or chord 282 that is separately anchored to the substructure 210. The end members or chords 282 are optional and carry the tension and compression transferred from the solid walled panel during ground movement. The end members or chords 282 are distinct from the securing members 268 discussed above and joined to the opposing ends of the solid walled panel by one or more fasteners as discussed above, e.g. screws, bolts, etc. The end members or chords 282 serve to increase the structural integrity of the solid walled panels. As a result, end members or chords to the opposing ends of the solid walled panels are preferentially added to the solid walled panel to improve the resistance of the grid framework structure to certain types of ground movement, such as in a seismic event. For a more stable substructure where the forces transferred from the substructure are weak, the use of the end members or chords is not necessary and the solid walled panels can be a simple replacement for the braced towers discussed above. The forces developed as a result of ground movement, such as tension and compression forces, are carried by the end members or chords 282. The end members or chords 282 are suitably anchored to the substructure to resist the uplift forces discussed above.

In addition to increasing the stability of the grid framework structure, the plurality of solid walled panels spatially distributed within the supporting framework structure can be adapted to create one or more zones within the grid framework structure, more, specifically, the supporting framework structure. The one or more zones can be a refrigerated zone comprising one or more refrigerated chillers. To reduce or prevent the transfer of heat from one or more of the zones created by the plurality of solid walled panels, preferably, each of the plurality of solid walled panels is thermally insulating. The plurality of solid walled panels spatially distributed within the supporting framework structure can also provide a fire break within the grid framework structure for restraining the spread of fire within the grid framework structure. As discussed above, one or more storage containers which are usually composed of plastic are stacked in the storage columns within the support framework structure. In an event of a fire at a single location and without any fire breaks, the fire can spread amongst the storage containers in stacks across multiple storage columns. The plurality of solid walled panels spatially distributed with the supporting framework structure act to restrain the spread of the fire to neighbouring stacks of storage containers. To function as a fire break, one or more of the solid walled panels comprises an insulating material, such as mineral wool or vermiculite. Taking the example where the solid walled panel is of a laminated construction comprising an inner core sandwiched between an outer skin, the inner core can be composed of a fire resistant material to prevent fire spreading to a neighbouring storage column.

Whilst the preferred embodiments of the present invention have been described in detail above, it should be understood that various modifications of the solid walled panels encompassing different features described above are applicable within the scope of the present invention as defined in the claims.

## Claims

1. A grid framework system comprising:
A) a substructure (210);
B) a grid framework structure (114) for supporting a load handling device (30) operative to move one or more containers (10) in a stack (12), said grid framework structure comprising:
i) a plurality of upright members (116), the plurality of upright members (116) being spatially arranged to form a three dimensional supporting framework structure (214b) comprising a plurality of vertical storage columns for storage containers to be stacked between the upright members, the supporting framework structure (214b) being mounted to the substructure (210);
ii) a grid structure (40) lying in a horizontal plane and mounted to the supporting framework structure (214b), said grid structure (40) comprising a plurality of grid members (118, 120) comprising a first set of grid members (118) and a second set of grid members (120), the first set of grid members extending in a first direction and the second set of grid members extending in a second direction, the second direction being substantially perpendicular to the first direction such that the plurality of grid members are arranged in a grid pattern comprising a plurality of grid cells, each of the plurality of grid cells comprising a grid opening;
wherein the grid framework structure (114) further comprises:
a plurality of solid walled panels (200) distributed internally within the supporting framework structure (214b) such that each of the plurality of solid walled panels (200) lies in a respective vertical plane within the supporting framework structure (214b) having a first end anchored to the substructure (210) and a second end secured to the grid structure (40) to provide stability to the grid framework structure (114);
**characterised in that** one or more of the plurality of solid walled panels (200) are secured to a pair of the plurality of upright members(116).

2. The grid framework system of claim 1, wherein the plurality of upright members (116) being interconnected at their upper ends by the plurality of grid members; wherein the first and second sets of grid members (118, 120) intersect in the grid structure (40) such that each of the plurality of vertical storage columns are located below a respective grid opening;

3. The grid framework system of any of the preceding claims, wherein the plurality of solid walled panels (200) are spatially distributed within the framework structure such that two or more of the plurality of solid walled panels (200) are separated by one or more of the plurality of upright members (116), and optionally, the plurality of solid walled panels 200 comprises a first set of solid walled panels and a second set of solid walled panels, the first set of solid walled panels extending in the first direction and the second set of solid walled panels extending in the second direction.

4. The grid framework system of claim 3, wherein the first set of solid walled panels are spatially distributed along the first direction and the second set of solid walled panels are spatially distributed along the second direction and optionally, the grid framework structure is a self-supporting rectilinear assemblage of the plurality of upright members (116) having a first dimension extending in the first direction and a second dimension extending in the second direction, and wherein the first set of solid walled panels (200) are spatially distributed along the first direction such that the first set of solid walled panels partially extends along the first dimension and the second set of solid walled panels are spatially distributed along the second direction such that the second set of solid walled panels partially extends along the second dimension.

5. The grid framework system of any of the preceding claims, wherein one or more of the plurality of solid walled panels (200) are spatially distributed within the framework structure such that adjacent solid walled panels (200) are spaced apart by one or more grid cells.

6. The grid framework system of any of the preceding claims, wherein each of the plurality of solid walled panels is secured to the grid structure at one or more nodes where the first (118) and the second (120) set of grid members intersect or meet in the grid structure, optionally, each of the plurality of upright members (116) is secured to the grid structure by a first type cap plate (58) and each of the plurality of the solid walled panels is secured to the grid structure by a second type cap plate (258), the first (58) and the second (258) type cap plates each having a cross shape having four perpendicular end portions (60, 260) each of the four perpendicular end portions being configured for connecting with at least one of the plurality of grid members extending in the first and the second directions, optionally, each of the plurality of the solid walled panels (200) is secured to its respective second type cap plate (258) by a bracket (262), optionally, the bracket (262) is L-shaped having downwardly extending bracket members (264) that are spaced apart corresponding to the thickness of the solid walled panel (200) for receiving the uppermost portion of the solid walled panel, optionally, each of the plurality of the solid walled panels (200) is secured to its respective second type cap plate (258) by a second type upright member comprising securing members (268) either side of the solid walled panel, the securing members (268) either side of the solid walled panel (200) at least partially extending vertically along the solid walled panel (200) between the substructure (210) and the grid structure (40) such that the upper ends of the securing members (268) either side of the solid walled panel (200) are secured to the second type cap plate (258), and optionally, each of the plurality of upright members (116) has a cross-section having a hollow centre section, and wherein the first type cap plate (58) comprises a spigot (62) arranged to be snap fitted into the hollow centre section.

7. The grid framework system of any of the preceding claims, wherein the width of one or more of the plurality of solid walled panels extends across a plurality of the grid cells, optionally, the width of the one or more of the plurality of solid walled panels (200) extends across a plurality of the grid cells in the ratio 1:X, where X is in the range 1 to 5, optionally, the width of the one or more of the plurality of solid walled panels extending in the first or second direction is inversely proportional to the depth of the anchorage of the one or more of the plurality of solid walled panels (200) to the substructure (210), optionally, the depth of the anchorage is dependent on the depth of the substructure, and optionally, the one or more of the plurality of solid walled panels (200) comprises a plurality of solid wall segments (280) joined together.

8. The grid framework system of any of the preceding claims, wherein one or more of the plurality of solid walled panels (200) comprises a laminated panel having an inner core (202) sandwiched between outer sheet metal plates (204), optionally, the inner core (202) comprises a composite comprising mineral fibres embedded within a resin matrix, optionally, the inner core (202) comprises an internal frame comprising upwardly extending frame members (206) connected together at the top and bottom of the upwardly extending frame members by horizontal frame members (208), optionally, each of the horizontal frame members (208) connecting the upwardly extending members (206) at the top and bottom comprises a U-shaped channel.

9. The grid framework system of any of the preceding claims, wherein each of the plurality of solid walled panels (200) is anchored to the substructure (210) by one or more bolts.

10. The grid framework system of any of the preceding claims, wherein the substructure (210) comprises concrete.

11. The grid framework system of any of the preceding claims, wherein one or more of the upright members (116) comprises an adjustable foot (90) at its lower end comprising an extendible portion (94) for adjusting the height of the upright member, optionally, the extendible portion comprises a threaded spindle (94) that threadingly engages with a push fit cap (96) at the lower end of the upright columns (116).

12. The grid framework system of any of the preceding claims, wherein one or more of the plurality of solid walled panels (200) are arranged in the supporting framework structure (214b) to create one or more zones within the supporting framework structure.

13. The grid framework system of any of the preceding claims, wherein one or more of the plurality of solid walled panels (200) comprises a fire break comprising a fire resistant material for creating a fire barrier within the supporting framework structure.

14. A storage and retrieval system 1 comprising:
i) a grid framework system as defined in any of the claims 1 to 13;
ii) a plurality of stacks (12) of containers 10 arranged in storage columns located below the grid structure (40), wherein each storage column is located vertically below a grid cell;
iii) a plurality of load handling devices (30) for lifting and moving containers stacked in the stacks, the plurality of load handling devices (30) being remotely operated to move laterally on the grid structure (40) above the storage columns to access the containers through the grid structure (40), each of said plurality of load handling devices comprising:
a) a wheel assembly for guiding the load handling device on the grid structure;
b) a container-receiving space located above the grid structure; and
c) a lifting device arranged to lift a single container from a stack into the container-receiving space.

## Patentansprüche

1. Gitterrahmensystem, umfassend:
A) eine Substruktur (210);
B) eine Gitterrahmenstruktur (114) zum Tragen einer Lasthandhabungsvorrichtung (30), die betreibbar ist, um einen oder mehrere Behälter (10) in einem Stapel (12) zu bewegen, wobei die Gitterrahmenstruktur Folgendes umfasst:
i) eine Vielzahl von aufrechten Elementen (116), wobei die Vielzahl von aufrechten Elementen (116) räumlich angeordnet ist, um eine dreidimensionale Tragrahmenstruktur (214b) auszubilden, die eine Vielzahl von vertikalen Lagersäulen für zwischen den aufrechten Elementen zu stapelnde Lagerbehälter umfasst, wobei die Tragrahmenstruktur (214b) an der Substruktur (210) montiert ist;
ii) eine Gitterstruktur (40), die in einer horizontalen Ebene liegt und an der Tragrahmenstruktur (214b) montiert ist, wobei die Gitterstruktur (40) eine Vielzahl von Gitterelementen (118, 120) umfasst, die einen ersten Satz von Gitterelementen (118) und einen zweiten Satz von Gitterelementen (120) umfasst, wobei sich der erste Satz von Gitterelementen in einer ersten Richtung erstreckt und sich der zweite Satz von Gitterelementen in einer zweiten Richtung erstreckt, wobei die zweite Richtung im Wesentlichen derart senkrecht zu der ersten Richtung ist, dass die Vielzahl von Gitterelementen in einem Gittermuster, das eine Vielzahl von Gitterzellen umfasst, angeordnet ist, wobei jede der Vielzahl von Gitterzellen eine Gitteröffnung umfasst; wobei die Gitterrahmenstruktur (114) ferner Folgendes umfasst:
eine Vielzahl von massiven Wandpaneelen (200), die intern innerhalb der Tragrahmenstruktur (214b) derart verteilt sind, dass jedes der Vielzahl von massiven Wandpaneelen (200) in einer jeweiligen vertikalen Ebene innerhalb der Tragrahmenstruktur (214b) liegt, die ein erstes Ende, das an der Substruktur (210) verankert ist, und ein zweites Ende, das an der Gitterstruktur (40) befestigt ist, aufweist, um der Gitterrahmenstruktur (114) Stabilität bereitzustellen;
**dadurch gekennzeichnet, dass** eines oder mehrere der Vielzahl von massiven Wandpaneelen (200) an einem Paar der Vielzahl von aufrechten Elementen (116) befestigt sind.

2. Gitterrahmensystem nach Anspruch 1, wobei die Vielzahl von aufrechten Elementen (116) an ihren oberen Enden durch die Vielzahl von Gitterelementen miteinander verbunden ist; wobei sich der erste und der zweite Satz von Gitterelementen (118, 120) in der Gitterstruktur (40) derart schneiden, dass sich jede der Vielzahl von vertikalen Lagersäulen unterhalb einer jeweiligen Gitteröffnung befindet;

3. Gitterrahmensystem nach einem der vorhergehenden Ansprüche, wobei die Vielzahl von massiven Wandpaneelen (200) innerhalb der Rahmenstruktur räumlich derart verteilt ist, dass zwei oder mehr der Vielzahl von massiven Wandpaneelen (200) durch eines oder mehrere der Vielzahl von aufrechten Elementen (116) getrennt sind, und die Vielzahl von massiven Wandpaneelen 200 optional einen ersten Satz von massiven Wandpaneelen und einen zweiten Satz von massiven Wandpaneelen umfasst, wobei sich der erste Satz von massiven Wandpaneelen in der ersten Richtung erstreckt und sich der zweite Satz von massiven Wandpaneelen in der zweiten Richtung erstreckt.

4. Gitterrahmensystem nach Anspruch 3, wobei der erste Satz von massiven Wandpaneelen räumlich entlang der ersten Richtung verteilt ist und der zweite Satz von massiven Wandpaneelen räumlich entlang der zweiten Richtung verteilt ist und die Gitterrahmenstruktur optional ein selbsttragender, geradliniger Zusammenbau der Vielzahl von aufrechten Elementen (116) ist, der eine erste Dimension, die sich in der ersten Richtung erstreckt, und eine zweite Dimension, die sich in der zweiten Richtung erstreckt, aufweist, und wobei der erste Satz von massiven Wandpaneelen (200) räumlich entlang der ersten Richtung derart verteilt ist, dass sich der erste Satz von massiven Wandpaneelen teilweise entlang der ersten Dimension erstreckt, und der zweite Satz von massiven Wandpaneelen räumlich entlang der zweiten Richtung derart verteilt ist, dass sich der zweite Satz von massiven Wandpaneelen teilweise entlang der zweiten Dimension erstreckt.

5. Gitterrahmensystem nach einem der vorhergehenden Ansprüche, wobei eines oder mehrere der Vielzahl von massiven Wandpaneelen (200) innerhalb der Rahmenstruktur räumlich derart verteilt sind, dass benachbarte massive Wandpaneele (200) durch eine oder mehrere Gitterzellen voneinander beabstandet sind.

6. Gitterrahmensystem nach einem der vorhergehenden Ansprüche, wobei jedes der Vielzahl von massiven Wandpaneelen an der Gitterstruktur an einem oder mehreren Knotenpunkten befestigt ist, an denen sich der erste (118) und der zweite (120) Satz von Gitterelementen in der Gitterstruktur schneiden oder treffen, jedes der Vielzahl von aufrechten Elementen (116) optional durch eine Abdeckplatte (58) einer ersten Art an der Gitterstruktur befestigt ist und jedes der Vielzahl der massiven Wandpaneele durch eine Abdeckplatte (258) einer zweiten Art an der Gitterstruktur befestigt ist, wobei die Abdeckplatte der ersten (58) und der zweiten (258) Art jeweils eine Kreuzform aufweisen, die vier senkrechte Endabschnitte (60, 260) aufweist, wobei jeder der vier senkrechten Endabschnitte zum Verbinden mit mindestens einem der Vielzahl von Gitterelementen konfiguriert ist, die sich in der ersten und der zweiten Richtung erstrecken, jedes der Vielzahl der massiven Wandpaneele (200) optional durch eine Halterung (262) an seiner jeweiligen Abdeckplatte (258) der zweiten Art befestigt ist, die Halterung (262) optional L-förmig ist, wobei sie sich nach unten erstreckende Halterungselemente (264) aufweist, die entsprechend der Dicke des massiven Wandpaneels (200) zum Aufnehmen des obersten Abschnitts des massiven Wandpaneels voneinander beabstandet sind, jedes der Vielzahl der massiven Wandpaneele (200) optional an seiner jeweiligen Abdeckplatte (258) der zweiten Art durch ein aufrechtes Element der zweiten Art befestigt ist, das Befestigungselemente (268) an beiden Seiten des massiven Wandpaneels umfasst, wobei sich die Befestigungselemente (268) an beiden Seiten des massiven Wandpaneels (200) mindestens teilweise vertikal entlang des massiven Wandpaneels (200) zwischen der Substruktur (210) und der Gitterstruktur (40) derart erstrecken, dass die oberen Enden der Befestigungselemente (268) an beiden Seiten des massiven Wandpaneels (200) an der Abdeckplatte (258) der zweiten Art befestigt sind, und jedes der Vielzahl von aufrechten Elementen (116) optional einen Querschnitt, der einen hohlen Mittelteilabschnitt aufweist, aufweist und wobei die Abdeckplatte (58) der ersten Art einen Zapfen (62) umfasst, der angeordnet ist, um in den hohlen Mittelteilabschnitt eingerastet zu werden.

7. Gitterrahmensystem nach einem der vorhergehenden Ansprüche, wobei sich die Breite eines oder mehrerer der Vielzahl von massiven Wandpaneelen über eine Vielzahl der Gitterzellen erstreckt, sich die Breite des einen oder der mehreren der Vielzahl von massiven Wandpaneelen (200) optional über eine Vielzahl der Gitterzellen in dem Verhältnis 1:X erstreckt, wobei X in dem Bereich 1 bis 5 ist, sich die Breite des einen oder der mehreren der Vielzahl von massiven Wandpaneelen, die sich in der ersten oder der zweiten Richtung erstreckt, optional umgekehrt proportional zu der Tiefe der Verankerung des einen oder der mehreren der Vielzahl von massiven Wandpaneelen (200) an der Substruktur (210) ist, die Tiefe der Verankerung optional von der Tiefe der Substruktur abhängig ist und das eine oder die mehreren der Vielzahl von massiven Wandpaneelen (200) optional eine Vielzahl von zusammengefügten massiven Wandsegmenten (280) umfassen.

8. Gitterrahmensystem nach einem der vorhergehenden Ansprüche, wobei eines oder mehrere der Vielzahl von massiven Wandpaneelen (200) ein laminiertes Paneel umfassen, das einen inneren Kern (202) aufweist, der zwischen äußeren Blechplatten (204) eingelegt ist, der innere Kern (202) optional einen Verbundwerkstoff umfasst, der innerhalb einer Harzmatrix eingebettete Mineralfasern umfasst, der innere Kern (202) optional einen inneren Rahmen umfasst, der sich nach oben erstreckende Rahmenelemente (206) umfasst, die an der Oberseite und der Unterseite der sich nach oben erstreckenden Rahmenelemente durch horizontale Rahmenelemente (208) zusammen verbunden sind, jedes der horizontalen Rahmenelemente (208), die die sich nach oben erstreckenden Elemente (206) an der Oberseite und der Unterseite verbinden, optional einen U-förmigen Kanal umfasst.

9. Gitterrahmensystem nach einem der vorhergehenden Ansprüche, wobei jedes der Vielzahl von massiven Wandpaneelen (200) durch ein oder mehrere Bolzen an der Substruktur (210) verankert ist.

10. Gitterrahmensystem nach einem der vorhergehenden Ansprüche, wobei die Substruktur (210) Beton umfasst.

11. Gitterrahmensystem nach einem der vorhergehenden Ansprüche, wobei eines oder mehrere der aufrechten Elemente (116) an ihrem unteren Ende einen verstellbaren Fuß (90) umfassen, der einen ausziehbaren Abschnitt (94) zum Verstellen der Höhe des aufrechten Elements umfasst; der ausziehbare Abschnitt optional eine Gewindespindel (94) umfasst, die mit einer Aufsteckkappe (96) an dem unteren Ende der aufrechten Säulen (116) in Gewindeeingriff steht.

12. Gitterrahmensystem nach einem der vorhergehenden Ansprüche, wobei eines oder mehrere der Vielzahl von massiven Wandpaneelen (200) in der Tragrahmenstruktur (214b) angeordnet sind, um eine oder mehrere Zonen innerhalb der Tragrahmenstruktur zu erstellen.

13. Gitterrahmensystem nach einem der vorhergehenden Ansprüche, wobei eines oder mehrere der Vielzahl von massiven Wandpaneelen (200) einen Brandschutzstreifen umfasst, der ein feuerbeständiges Material zum Erstellen einer Brandschutzbarriere innerhalb der Tragrahmenstruktur umfasst.

14. Lager- und Rückholsystem 1, umfassend:
i) ein Gitterrahmensystem nach einem der Ansprüche 1 bis 13;
ii) eine Vielzahl von Stapeln (12) von Behältern 10, die in Lagersäulen angeordnet sind, die sich unterhalb der Gitterstruktur (40) befinden, wobei sich jede Lagersäule vertikal unterhalb einer Gitterzelle befindet;
iii) eine Vielzahl von Lasthandhabungsvorrichtungen (30) zum Heben und Bewegen von Behältern, die in den Stapeln gestapelt sind, wobei die Vielzahl von Lasthandhabungsvorrichtungen (30) fernbedient wird, um sich seitlich auf der Gitterstruktur (40) oberhalb der Lagersäulen zu bewegen, um durch die Gitterstruktur (40) auf die Behälter zuzugreifen, wobei jede der Vielzahl von Lasthandhabungsvorrichtungen Folgendes umfasst:
a) eine Radbaugruppe zum Führen der Lasthandhabungsvorrichtung auf der Gitterstruktur;
b) einen Behälteraufnahmeraum, der sich oberhalb der Gitterstruktur befindet; und
c) eine Hebevorrichtung, die angeordnet ist, um einen einzelnen Behälter aus einem Stapel in den Behälteraufnahmeraum zu heben.

## Revendications

1. Système d'ossature de grille comprenant :
A) une sous-structure (210) ;
B) une structure d'ossature de grille (114) destinée à supporter un dispositif de manutention de charge (30) permettant de déplacer un ou plusieurs conteneurs (10) dans une pile (12), ladite structure d'ossature de grille comprenant :
i) une pluralité d'éléments verticaux (116), la pluralité d'éléments verticaux (116) étant agencés spatialement pour former une structure d'ossature de support tridimensionnelle (214b) comprenant une pluralité de colonnes de stockage verticales pour les conteneurs de stockage à empiler entre les éléments verticaux, la structure d'ossature de support (214b) étant montée sur la sous-structure (210) ;
ii) une structure de grille (40) se trouvant dans un plan horizontal et montée sur la structure d'ossature de support (214b), ladite structure de grille (40) comprenant une pluralité d'éléments de grille (118, 120) comprenant un premier jeu d'éléments de grille (118) et un second jeu d'éléments de grille (120), le premier jeu d'éléments de grille s'étendant dans une première direction et le second jeu d'éléments de grille s'étendant dans une seconde direction, la seconde direction étant sensiblement perpendiculaire à la première direction de sorte que la pluralité d'éléments de grille sont agencés selon un motif de grille comprenant une pluralité de cellules de grille, chacune de la pluralité de cellules de grille comprenant une ouverture de grille ;
dans lequel la structure d'ossature de grille (114) comprend en outre :
une pluralité de panneaux à parois solides (200) répartis à l'intérieur au sein de la structure d'ossature de support (214b) de telle sorte que chacun de la pluralité de panneaux à parois solides (200) se trouve dans un plan vertical respectif au sein de la structure d'ossature de support (214b) ayant une première extrémité ancrée à la sous-structure (210) et une seconde extrémité fixée à la structure de grille (40) pour assurer la stabilité de la structure d'ossature de grille (114) ;
**caractérisé en ce qu'**un ou plusieurs de la pluralité de panneaux à parois solides (200) sont fixés à une paire de la pluralité d'éléments verticaux (116).

2. Système d'ossature de grille selon la revendication 1, dans lequel la pluralité d'éléments verticaux (116) sont reliés entre eux au niveau de leurs extrémités supérieures par la pluralité d'éléments de grille ; dans lequel les premier et second jeux d'éléments de grille (118, 120) se croisent dans la structure de grille (40) de sorte que chacune de la pluralité de colonnes de stockage verticales soit située sous une ouverture de grille respective.

3. Système d'ossature de grille selon l'une quelconque des revendications précédentes, dans lequel la pluralité de panneaux à parois solides (200) sont répartis spatialement au sein de la structure d'ossature de telle sorte que deux panneaux ou plus de la pluralité de panneaux à parois solides (200) soient séparés par un ou plusieurs de la pluralité d'éléments verticaux (116), et éventuellement, la pluralité de panneaux à parois solides (200) comprend un premier jeu de panneaux à parois solides et un second jeu de panneaux à parois solides, le premier jeu de panneaux à parois solides s'étendant dans la première direction et le second jeu de panneaux à parois solides s'étendant dans la seconde direction.

4. Système d'ossature de grille selon la revendication 3, dans lequel le premier jeu de panneaux à parois solides sont répartis spatialement le long de la première direction et le second jeu de panneaux à parois solides sont répartis spatialement le long de la seconde direction et, éventuellement, la structure d'ossature de grille est un assemblage rectiligne autoportant de la pluralité d'éléments verticaux (116) ayant une première dimension s'étendant dans la première direction et une seconde dimension s'étendant dans la seconde direction, et dans lequel le premier jeu de panneaux à parois solides (200) sont répartis spatialement le long de la première direction de telle sorte que le premier jeu de panneaux à parois solides s'étend en partie le long de la première dimension et le second jeu de panneaux à parois solides sont répartis spatialement le long de la seconde direction de telle sorte que le second jeu de panneaux à parois solides s'étend en partie le long de la seconde dimension.

5. Système d'ossature de grille selon l'une quelconque des revendications précédentes, dans lequel un ou plusieurs de la pluralité de panneaux à parois solides (200) sont répartis spatialement au sein de la structure d'ossature de telle sorte que les panneaux à parois solides adjacents (200) soient espacés par une ou plusieurs cellules de grille.

6. Système d'ossature de grille selon l'une quelconque des revendications précédentes, dans lequel chacun de la pluralité de panneaux à parois solides est fixé à la structure de grille au niveau d'un ou plusieurs nœuds où le premier (118) et le second (120) jeu d'éléments de grille se croisent ou se rejoignent, éventuellement, chacun de la pluralité d'éléments verticaux (116) est fixé à la structure de grille par une plaque de recouvrement de premier type (58) et chacun de la pluralité de panneaux à parois solides est fixé à la structure de grille par une plaque de recouvrement de second type (258), les plaques de recouvrement de premier type (58) et de second type (258) ayant chacune une forme en croix à quatre parties d'extrémités perpendiculaires (60, 260), chacune des quatre parties d'extrémités perpendiculaires étant configurée pour être reliée à au moins l'un de la pluralité d'éléments de grille s'étendant dans les première et seconde directions, éventuellement, chacun de la pluralité de panneaux à parois solides (200) est fixé à sa plaque de recouvrement de second type (258) respective par un support (262), éventuellement le support (262) est en forme de L comportant des éléments de support (264) s'étendant vers le bas qui sont espacés d'une distance correspondant à l'épaisseur du panneau à parois solides (200) pour recevoir la partie supérieure du panneau à parois solides, éventuellement, chacun de la pluralité de panneaux à parois solides (200) est fixé à sa plaque de recouvrement de second type (258) respective par un élément vertical de second type comprenant des éléments de fixation (268) de part et d'autre du panneau à parois solides, les éléments de fixation (268) de part et d'autre du panneau à parois solides (200) s'étendant au moins en partie verticalement le long du panneau à parois solides (200) entre la sous-structure (210) et la structure de grille (40), de sorte que les extrémités supérieures des éléments de fixation (268) de part et d'autre du panneau à parois solides (200) soient fixées à la plaque de recouvrement de second type (258), et éventuellement, chacun de la pluralité d'éléments verticaux (116) a une section transversale ayant une section centrale creuse, et dans lequel la plaque de recouvrement de premier type (58) comprend une saillie (62) agencée pour s'emboîter dans la section centrale creuse.

7. Système d'ossature de grille selon l'une quelconque des revendications précédentes, dans lequel la largeur d'un ou plusieurs de la pluralité de panneaux à parois solides s'étend sur une pluralité de cellules de grille, éventuellement, la largeur des un ou plusieurs de la pluralité de panneaux à parois solides (200) s'étend sur une pluralité des cellules de grille selon le rapport de 1:X, où X est situé dans la plage allant de 1 à 5, éventuellement, la largeur des un ou plusieurs de la pluralité de panneaux à parois solides s'étendant dans la première ou la seconde direction est inversement proportionnelle à la profondeur de l'ancrage des un ou plusieurs de la pluralité de panneaux à parois solides (200) à la sous-structure (210), éventuellement, la profondeur de l'ancrage dépend de la profondeur de la sous-structure, et éventuellement, les un ou plusieurs de la pluralité de panneaux à parois solides (200) comprennent une pluralité de segments de parois solides (280) joints ensemble.

8. Système d'ossature de grille selon l'une quelconque des revendications précédentes, dans lequel un ou plusieurs de la pluralité de panneaux à parois solides (200) comprennent un panneau stratifié ayant un noyau intérieur (202) pris en sandwich entre des plaques métalliques de tôle externe (204), éventuellement, le noyau intérieur (202) comprend un composite comprenant des fibres minérales incorporées au sein d'une matrice de résine, éventuellement, le noyau intérieur (202) comprend un cadre interne comprenant des éléments de cadre s'étendant vers le haut (206) reliés entre eux en haut et en bas des éléments de cadre s'étendant vers le haut par des éléments de cadre horizontaux (208), éventuellement, chacun des éléments de cadre horizontaux (208) reliant les éléments s'étendant vers le haut (206) en haut et en bas comprend un canal en forme de U.

9. Système d'ossature de grille selon l'une quelconque des revendications précédentes, dans lequel chacun de la pluralité de panneaux à parois solides (200) est ancré à la sous-structure (210) par un ou plusieurs boulons.

10. Système d'ossature de grille selon l'une quelconque des revendications précédentes, dans lequel la sous-structure (210) comprend du béton.

11. Système d'ossature de grille selon l'une quelconque des revendications précédentes, dans lequel un ou plusieurs des éléments verticaux (116) comprennent un pied ajustable (90) à son extrémité inférieure comprenant une partie extensible (94) pour ajuster la hauteur de l'élément vertical, éventuellement, la partie extensible comprend une broche filetée (94) qui vient en prise par filetage avec un capuchon à ajustement par pression (96) à l'extrémité inférieure des colonnes verticales (116).

12. Système d'ossature de grille selon l'une quelconque des revendications précédentes, dans lequel un ou plusieurs de la pluralité de panneaux à parois solides (200) sont agencés dans la structure d'ossature de support (214b) pour créer une ou plusieurs zones au sein de la structure d'ossature de support.

13. Système d'ossature de grille selon l'une quelconque des revendications précédentes, dans lequel un ou plusieurs de la pluralité de panneaux à parois solides (200) comprennent un coupe-feu constitué d'un matériau résistant au feu pour créer une barrière coupe-feu au sein de la structure d'ossature de support.

14. Système de stockage et de récupération (1) comprenant :
i) un système d'ossature de grille tel que défini dans l'une quelconque des revendications 1 à 13 ;
ii) une pluralité de piles (12) de conteneurs (10) agencées en colonnes de stockage situées sous la structure de grille (40), dans lequel chaque colonne de stockage est située verticalement sous une cellule de grille ;
iii) une pluralité de dispositifs de manutention de charge (30) pour le levage et le déplacement des conteneurs empilés en piles, la pluralité de dispositifs de manutention de charge (30) étant télécommandés pour se déplacer latéralement sur la structure de grille (40) au-dessus des colonnes de stockage afin d'accéder aux conteneurs à travers la structure de grille (40), chacun de ladite pluralité de dispositifs de manutention de charge comprenant :
a) un ensemble de roues pour guider le dispositif de manutention de charge sur la structure de grille ;
b) un espace de réception de conteneur situé au-dessus de la structure de grille ; et
c) un dispositif de levage agencé pour soulever un seul conteneur d'une pile à l'intérieur de l'espace de réception de conteneur.
